# EUROPEAN PATENT APPLICATION

(11) **EP 4 307 595 A1**
(43) Date of publication of application: **17.01.2024**
(21) Application number: 22784145.9
(22) Date of filing: 08.04.2022
(51) Int. Cl.: H04L 5/00

(54) **METHOD AND APPARATUS FOR TRANSMITTING PHYSICAL LAYER CONTROL INFORMATION**

(30) Priority: 09.04.2021 CN 202110387954
(71) Applicant: HUAWEI TECHNOLOGIES CO., LTD., Shenzhen Guangdong 518129 (CN)
(72) Inventor: LYU, Yongxia, Shenzhen, Guangdong 518129 (CN); MA, Jianglei, Shenzhen, Guangdong 518129 (CN); WANG, Ting, Shenzhen, Guangdong 518129 (CN); WANG, Jun, Shenzhen, Guangdong 518129 (CN)
(74) Representative: Körber, Martin Hans
(86) International application number: PCT/CN2022/085831
(87) International publication number: WO 2022/214079

(57) **Abstract**

This application provides a physical layer control information transmission method and apparatus, to improve data transmission reliability and reduce latency, and relates to the field of wireless communication technologies. In the method, a first communication apparatus may obtain first physical layer control information. The first physical layer control information may include N pieces of first information, where N is greater than or equal to 2. The first communication apparatus may obtain target first information from the N pieces of first information. The target first information may indicate a frequency domain resource of a first channel. The first communication apparatus may estimate the first channel based on the target first information. The first communication apparatus may obtain second physical layer control information. The second physical layer control information includes signaling information that may be used by the first communication apparatus to send feedback information corresponding to the first channel. The first communication apparatus may send the feedback information based on the second physical layer control information.

## Description

### CROSS-REFERENCE TO RELATED APPLICATIONS

This application claims priority to Chinese Patent Application No. 202110387954.2, filed with the China National Intellectual Property Administration on April 9, 2021 and entitled "PHYSICAL LAYER CONTROL INFORMATION TRANSMISSION METHOD AND APPARATUS", which is incorporated herein by reference in its entirety.

### TECHNICAL FIELD

This application relates to the field of wireless communication technologies, and in particular, to a physical layer control information transmission method and apparatus.

### BACKGROUND

Ultra-reliability and low-latency communication (ultra-reliability low latency communication, URLLC) is one of important application scenarios of the 5th generation mobile communication technology (5th generation mobile network, 5G). URLLC features low latency and high reliability, and therefore is widely used in fields such as autonomous driving, industrial manufacturing, the internet of vehicles, and smart grids. In 5G, a hybrid automatic repeat request (hybrid automatic repeat request) processing feedback capability is proposed to meet a high-reliability requirement of URLLC under a specific latency limit.

However, because a HARQ processing feedback capability of a terminal device is limited, how to balance reliability and a low-latency requirement becomes a foremost problem.

### SUMMARY

This application provides a physical layer control information transmission method and apparatus, to improve data transmission reliability and reduce latency.

According to a first aspect, a physical layer control information transmission method is provided. The method may be performed by a first communication apparatus, or may be performed by a chip having a function similar to that of the first communication apparatus. In the method, the first communication apparatus may obtain first physical layer control information. The first physical layer control information may include N pieces of first information, where N is greater than or equal to 2. The first communication apparatus may obtain target first information from the N pieces of first information. The target first information may indicate a frequency domain resource of a first channel. The first communication apparatus may estimate the first channel based on the target first information. The first communication apparatus may obtain second physical layer control information. The second physical layer control information includes signaling information that may be used by the first communication apparatus to send feedback information corresponding to the first channel. The first communication apparatus may send the feedback information based on the second physical layer control information.

Based on the foregoing solution, physical layer control information is divided into different physical layer control information and separately sent to a communication apparatus, to enable parallel processing of a control channel and a data channel. This can reduce processing latency of the communication apparatus. In addition, because the processing latency of the communication apparatus is reduced, a quantity of HARQ transmissions within maximum end-to-end latency can be increased, thereby improving data transmission reliability.

In a possible implementation, the first communication apparatus may blindly detect the first physical layer control information in a search space. A maximum value of a quantity of blind detections is predefined, or is indicated by a second communication apparatus.

Based on the foregoing solution, the first communication apparatus may blindly detect the first physical layer control information in the search space based on the maximum value of the quantity of blind detections, so that the quantity of times of blindly detecting the first physical layer control information can be reduced. This reduces the processing latency of the communication apparatus.

In a possible implementation, the first communication apparatus may perform channel estimation on a second channel based on a demodulation reference signal (demodulation reference signal, DMRS) of the second channel.

Based on the foregoing solution, the first communication apparatus may perform channel estimation on the second channel based on the DMRS of the second channel. This can reduce a quantity of times that the first communication apparatus performs channel estimation on the second channel, and reduce channel estimation time required for the second channel.

In a possible implementation, a time-frequency resource of the second channel may be M control channel elements (control channel elements, CCEs). M is greater than or equal to 1. Optionally, the first communication apparatus performs channel estimation on the second channel based on DMRSs of the M CCEs of the second channel. Optionally, if the second channel is wideband, M may be greater than or equal to 2.

Based on the foregoing solution, the first communication apparatus may perform channel estimation based on the DMRSs of the M CCEs of the second channel, and may not need to perform channel estimation based on a DMRS at each CCE set level. This can reduce channel estimation time required for a control channel, and reduce processing latency of the first communication apparatus.

In a possible implementation, the M CCEs are consecutive CCEs.

In a possible implementation, the first communication apparatus performs channel estimation on the first channel based on the DMRS of the second channel.

Based on the foregoing solution, the first communication apparatus may reuse the DMRS of the second channel to estimate the first channel, so that the processing latency of the first communication apparatus can be reduced. In addition, in a time-frequency resource of the first channel, a DMRS occupies a few REs, so that more resources can be used for the first channel, thereby improving data reliability.

In a possible implementation, the first communication apparatus may perform channel estimation on the first channel based on a DMRS symbol corresponding to the first channel.

Based on the foregoing solution, the first communication apparatus may perform channel estimation on the first channel based on the DMRS symbol. This reduces DMRS overheads of the first channel, and improves data reliability.

In a possible implementation, a subcarrier spacing of the DMRS symbol may be greater than a subcarrier spacing of the second channel. Alternatively, a subcarrier spacing of the DMRS symbol may be greater than a subcarrier spacing of the first channel.

Based on the foregoing solution, a symbol length of the DMRS symbol may be shorter than a symbol length of the first channel, so that latency can also be reduced. In addition, DMRS bandwidth of the DMRS symbol is larger, and therefore the DMRS symbol is more suitable for channel estimation on the first channel and the second channel.

In a possible implementation, the subcarrier spacing of the first channel is less than the subcarrier spacing of the second channel.

Based on the foregoing solution, a symbol length of the second channel is shorter than the symbol length of the first channel. This can also reduce latency, and can reduce overheads of the second channel. In addition, bandwidth of the second channel is larger, and DMRS bandwidth of the second channel is also larger Therefore, the DMRS of the second channel is more suitable for channel estimation on the first channel.

In a possible implementation, the first communication apparatus obtains third physical layer control information, where the third physical layer control information includes at least one of the following: a hybrid automatic repeat request (hybrid automatic repeat request, HARQ) process number, a new data indicator (new data indicator, NDI), a modulation and coding scheme, a transport block size, or precoding matrix information of the first channel.

Based on the foregoing solution, physical layer control information of the first communication apparatus may be divided into different physical layer control information and sent to a communication apparatus, to enable parallel processing of a control channel and a data channel. This can reduce processing latency of the communication apparatus. In addition, because the processing latency of the communication apparatus is reduced, a quantity of HARQ transmissions within maximum end-to-end latency can be increased, thereby improving data transmission reliability.

In a possible implementation, a time-frequency resource or CCE location information of the first physical layer control information is indicated by the second communication apparatus, or a time-frequency resource or CCE location information of the first physical layer control information is predefined.

Based on the foregoing solution, the first communication apparatus may blindly detect the first physical layer control information based on the time-frequency resource or the CCE location information of the first physical layer control information, to obtain the target first information.

In a possible implementation, a time-frequency resource or CCE location information of the second physical layer control information is indicated by the second communication apparatus, or a time-frequency resource or CCE location information of the second physical layer control information is predefined.

Based on the foregoing solution, the first communication apparatus may obtain the second physical layer control information based on the time-frequency resource or the CCE location information of the second physical layer control information.

In a possible implementation, the target first information further includes at least one of the following: indication information of a time domain resource of the first channel, pilot information of the first channel, precoding matrix information of the first channel, or a modulation and coding scheme.

Based on the foregoing solution, the first communication apparatus may obtain information for demodulating the first channel and decoding information together, so that channel estimation on the first channel and decoding of the first channel can be jointly performed, thereby improving a decoding success rate and reducing a block error rate of a data channel.

In a possible implementation, the signaling information includes at least one of the following: power control information of a channel carrying the feedback information, resource information of the channel carrying the feedback information, or format information of the channel carrying the feedback information.

Based on the foregoing solution, the first communication apparatus may prepare, based on the signaling information, the channel that carries the feedback information, and send the feedback information to the second communication apparatus.

In a possible implementation, the second physical layer control information further includes at least one of the following: a HARQ process number, an NDI, a modulation and coding scheme, a transport block size, or precoding matrix information of the first channel.

Based on the foregoing solution, physical layer control information such as the HARQ process number, the NDI, the modulation and coding scheme, the transport block size, or the precoding matrix information may be included in the second physical layer control information, so that a payload of the first physical layer control information can be reduced and reliability of the first physical layer control information can be improved.

In a possible implementation, the first physical layer control information is scrambled by a radio network temporary identifier (radio network temporary identity, RNTI). Based on the foregoing solution, the first communication apparatus having the RNTI may obtain the first physical layer control information, so that security of the first physical layer control information can be improved.

In a possible implementation, the RNTI is an RNTI of a group to which the first communication apparatus belongs. Based on the foregoing solution, the first physical layer control information may be scrambled by an RNTI of the first communication apparatus or the RNTI of the group to which the first communication apparatus belongs, so that security of the first physical layer control information can be improved.

In a possible implementation, the second physical layer control information may be second physical layer control information of the group to which the first communication apparatus belongs, and the second physical layer control information of the group may include second physical layer control information corresponding to the first communication apparatus.

Based on the foregoing solution, the second physical layer control information corresponding to the first communication apparatus is carried in the second physical layer control information of the group, so that collision of physical layer control information can be reduced, and a total quantity of blind detections can be reduced.

In a possible implementation, a location of first information corresponding to the first communication apparatus in the first physical layer control information is indicated by the second communication apparatus, or a location of first information corresponding to the first communication apparatus in the first physical layer control information is determined by the first communication apparatus based on a predefined condition. Based on the foregoing solution, the first communication apparatus may obtain the target first information from the first physical layer control information.

In a possible implementation, a location, in the second physical layer control information of the group to which the first communication apparatus belongs, of the second physical layer control information corresponding to the first communication apparatus is indicated by the second communication apparatus, or a location, in the second physical layer control information of the group to which the first communication apparatus belongs, of the second physical layer control information corresponding to the first communication apparatus is determined by the first communication apparatus based on a predefined condition. Based on the foregoing solution, the first communication apparatus may obtain the second physical layer control information of the first communication apparatus from the second physical layer control information of the group.

In a possible implementation, a channel estimation manner of the first channel is indicated by the second communication apparatus by using signaling, a channel estimation manner of the first channel is indicated by using the first information, or a channel estimation manner of the first channel is predefined. Based on the foregoing solution, the first communication apparatus may determine, based on the channel estimation manner of the first channel, DMRSs that are for performing channel estimation on the first channel.

In a possible implementation, the second physical layer control information is carried on the first 1 to T symbols of the first channel. Based on the foregoing solution, the first communication apparatus may quickly and concurrently demodulate and read the second physical layer control information while demodulating data, and prepare the channel that carries the feedback information.

In a possible implementation, the feedback information may include HARQ acknowledgment information and/or channel state information CSI. Based on the foregoing solution, the second communication apparatus may receive the HARQ acknowledgment information and/or the CSI from the first communication apparatus.

According to a second aspect, a physical layer control information transmission method is provided. The method may be performed by a second communication apparatus, or may be performed by a chip having a function similar to that of the second communication apparatus. In the method, the second communication apparatus may send first physical layer control information. The first physical layer control information may include N pieces of first information, where N is greater than or equal to 2. The N pieces of first information may include target first information corresponding to a first channel. The target first information may include indication information of a frequency domain resource of the first channel. The second communication apparatus may send the first channel based on the target first information. The second communication apparatus may send second physical layer control information, where the second physical layer control information may include signaling information of feedback information of the first channel. The second communication apparatus may receive a second channel.

Based on the foregoing solution, physical layer control information is separately sent to a first communication apparatus, to enable parallel processing of a control channel and a data channel. This can reduce processing latency of the communication apparatus. In addition, because the processing latency of the communication apparatus is reduced, a quantity of HARQ transmissions within maximum end-to-end latency can be increased, thereby improving data transmission reliability.

In a possible implementation, the second communication apparatus may send third physical layer control information. The third physical layer control information may include at least one of the following: a HARQ process number, an NDI, a modulation and coding scheme, a transport block size, or precoding matrix information of the first channel.

Based on the foregoing solution, physical layer control information of the first communication apparatus may be divided into different physical layer control information and sent to a communication apparatus, to enable parallel processing of a control channel and a data channel. This can reduce processing latency of the communication apparatus. In addition, because the processing latency of the communication apparatus is reduced, a quantity of HARQ transmissions within maximum end-to-end latency can be increased, thereby improving data transmission reliability.

In a possible implementation, the target first information may further include at least one of the following: indication information of a time domain resource of the first channel, pilot information of the first channel, precoding matrix information of the first channel, or a modulation and coding scheme.

Based on the foregoing solution, the first communication apparatus may obtain information for demodulating the first channel and decoding information together, so that channel estimation on the first channel and decoding of the first channel can be jointly performed, thereby improving a decoding success rate and reducing a block error rate of a data channel.

In a possible implementation, the signaling information may include at least one of the following: power control information of a channel carrying the feedback information, resource information of the channel carrying the feedback information, or format information of the channel carrying the feedback information.

Based on the foregoing solution, the first communication apparatus may prepare, based on the signaling information, the channel that carries the feedback information, and send the feedback information to the second communication apparatus.

In a possible implementation, the second physical layer control information may further include at least one of the following: a HARQ process number, an NDI, a modulation and coding scheme, a transport block size, or precoding matrix information of the first channel.

Based on the foregoing solution, physical layer control information such as the HARQ process number, the NDI, the modulation and coding scheme, the transport block size, or the precoding matrix information may be included in the second physical layer control information, so that a payload of the first physical layer control information can be reduced and reliability of the first physical layer control information can be improved.

In a possible implementation, the first physical layer control information is scrambled by a radio network temporary identifier RNTI. Based on the foregoing solution, the first communication apparatus having the RNTI may obtain the first physical layer control information, so that security of the first physical layer control information can be improved.

In a possible implementation, the RNTI may be an RNTI of a group to which the first communication apparatus belongs. Based on the foregoing solution, the first physical layer control information may be scrambled by the RNTI of the group to which the first communication apparatus belongs, so that security of the first physical layer control information can be improved.

In a possible implementation, the second physical layer control information may be second physical layer control information of the group, and the second physical layer control information of the group may include second physical layer control information corresponding to the first communication apparatus.

Based on the foregoing solution, the second physical layer control information corresponding to the first communication apparatus is carried in the second physical layer control information of the group, so that collision of physical layer control information can be reduced, and a total quantity of blind detections can be reduced.

In a possible implementation, the second physical layer control information may be carried on the first 1 to T symbols of the first channel. Based on the foregoing solution, the first communication apparatus may quickly and concurrently demodulate and read the second physical layer control information while demodulating data, and prepare the channel that carries the feedback information.

In a possible implementation, the feedback information may include HARQ acknowledgment information and/or channel state information CSI. Based on the foregoing solution, the second communication apparatus may receive the HARQ acknowledgment information and/or the CSI from the first communication apparatus.

In a possible implementation, the second communication apparatus may indicate, to the first communication apparatus, a time-frequency resource or control channel element CCE location information of the first physical layer control information; and/or the second communication apparatus may indicate, to the first communication apparatus, a time-frequency resource or control channel element CCE location information of the second physical layer control information.

Based on the foregoing solution, the first communication apparatus may blindly detect the first physical layer control information based on the time-frequency resource or the CCE location information of the first physical layer control information, to obtain the target first information; and may obtain the second physical layer control information based on the time-frequency resource or the CCE location information of the second physical layer control information. This reduces blind detection complexity of the physical layer control information and reduces latency.

In a possible implementation, the second communication apparatus may indicate, to the first communication apparatus, information about a location of first information corresponding to a first communication apparatus in the first physical layer control information. Based on the foregoing solution, the first communication apparatus may obtain the target first information from the first physical layer control information.

In a possible implementation, the second communication apparatus may indicate, to the first communication apparatus, information about a location of second physical layer control information of the first communication apparatus in the second physical layer control information of the group. Based on the foregoing solution, the first communication apparatus may obtain the second physical layer control information of the first communication apparatus from the second physical layer control information of the group.

In a possible implementation, the second communication apparatus indicates, to the first communication apparatus, a maximum value of a quantity of times of blindly detecting the first physical layer control information. Based on the foregoing solution, the second communication apparatus indicates the maximum value of the quantity of blind detections, so that the quantity of times of blindly detecting the first physical layer control information can be reduced. This reduces the processing latency of the communication apparatus.

In a possible implementation, the second communication apparatus may indicate a channel estimation manner of the first channel to the first communication apparatus by using signaling, or the first information may include a channel estimation manner of the first channel. Based on the foregoing solution, the first communication apparatus may determine, based on the channel estimation manner of the first channel, DMRSs that are for performing channel estimation on the first channel.

According to a third aspect, a data transmission method is provided. The method may be performed by a first communication apparatus, or may be performed by a chip having a function similar to that of the first communication apparatus. In the method, the first communication apparatus may obtain a first bit stream from an application layer or a non-access stratum (non-access stratum, NAS) layer. The first communication apparatus may input the first bit stream to a radio access layer RAL layer for RAL layer function processing to generate a second bit stream. The second bit stream may include an RAL header and the first bit stream. The RAL function processing includes at least data transfer. The first communication apparatus may input the second bit stream to a radio physical layer for radio physical layer function processing to generate a third bit stream. The radio physical layer function processing may include at least channel coding. The first communication apparatus may send the third bit stream.

Based on the foregoing solution, a processing function of the communication apparatus during data preparation can be reduced, and processing latency of the communication apparatus can be reduced. In this way, a quantity of HARQ transmissions within maximum end-to-end latency can be increased, thereby improving data transmission reliability.

In a possible implementation, the RAL header may include first information. The first information may indicate whether the first bit stream is a data bearer or a signaling bearer. Alternatively, the first information may indicate at least two logical channel identities, a first logical channel identity in the at least two logical channel identities may correspond to a data bearer, and a second logical channel identity may correspond to a signaling bearer. Alternatively, the first information may indicate that the first bit stream is from the application layer, or the first information may indicate that the first bit stream is from the NAS layer.

Based on the foregoing solution, air interface header overheads can be reduced.

In a possible implementation, the second bit stream may include a message authentication code for integrity part. The message authentication code for integrity part may follow the first bit stream.

Based on the foregoing solution, a message authentication code for integrity function enables a receiving entity to detect whether a signaling message and user plane data are tampered with.

In a possible implementation, the RAL header in the second bit stream may precede the first bit stream.

Based on the foregoing solution, air interface header overheads can be reduced.

In a possible implementation, the RAL layer function processing may further include at least one of the following: entity establishment, entity release, HARQ, radio bearer release, radio bearer establishment, exception handling, event triggering, paging channel message reception, broadcast channel reception, RAL duplication, Ethernet header compression, timing advance, random access, or data volume calculation.

Based on the foregoing solution, an original user plane protocol stack function may be simplified, and processing latency of the communication apparatus can be reduced by implementing the foregoing function by using the RAL layer.

In a possible implementation, the radio bearer establishment may include data radio bearer establishment and/or signaling radio bearer establishment. Based on the foregoing solution, the RAL layer may have a data radio bearer establishment function and a signaling radio bearer establishment function.

In a possible implementation, the radio bearer release may include data radio bearer release and/or signaling radio bearer release. Based on the foregoing solution, the RAL layer may have a data radio bearer release function and a signaling radio bearer release function.

According to a fourth aspect, a data transmission method is provided. The method may be performed by a first communication apparatus, or may be performed by a chip having a function similar to that of the first communication apparatus. In the method, the first communication apparatus may receive a fourth bit stream. The first communication apparatus may input the fourth bit stream to a radio physical layer for radio physical layer function processing to generate a fifth bit stream. The radio physical layer function processing may include at least channel decoding. The fifth bit stream may include an RAL header and a sixth bit stream. The first communication apparatus may input the fifth bit stream to a radio access layer RAL layer for RAL layer function processing to generate the sixth bit stream. The RAL function processing includes at least data transfer. The first communication apparatus may transmit the sixth bit stream to an application layer or a non-access stratum NAS layer.

Based on the foregoing solution, a processing function of the communication apparatus during data processing can be reduced, and processing latency of the communication apparatus can be reduced. In this way, a quantity of HARQ transmissions within maximum end-to-end latency can be increased, thereby improving data transmission reliability.

In a possible implementation, the RAL header may include first information. The first information may indicate whether the fourth bit stream is a data bearer or a signaling bearer. Alternatively, the first information may indicate at least two logical channel identities, a first logical channel identity in the at least two logical channel identities may correspond to a data bearer, and a second logical channel identity may correspond to a signaling bearer. Alternatively, the first information may indicate that the fourth bit stream is from the application layer or the NAS layer.

Based on the foregoing solution, air interface header overheads can be reduced.

In a possible implementation, the fifth bit stream may include a message authentication code for integrity part. The message authentication code for integrity part may be located in the last 1 to K bytes in the fifth bit stream, where K is greater than or equal to 1.

Based on the foregoing solution, a message authentication code for integrity function enables a receiving entity to detect whether a signaling message and user plane data are tampered with.

In a possible implementation, the RAL header in the fifth bit stream may precede the sixth bit stream. Based on the foregoing solution, air interface header overheads can be reduced.

In a possible implementation, the RAL layer function processing may further include at least one of the following: entity establishment, entity release, hybrid automatic repeat request HARQ, radio bearer release, radio bearer establishment, exception handling, event triggering, paging channel message reception, broadcast channel reception, RAL duplication, Ethernet header compression, timing advance, random access, or data volume calculation.

Based on the foregoing solution, an original user plane protocol stack function may be simplified, and processing latency of the communication apparatus can be reduced by implementing the foregoing function by using the RAL layer.

In a possible implementation, the radio bearer establishment may include data radio bearer establishment and/or signaling radio bearer establishment. Based on the foregoing solution, the RAL layer may have a data radio bearer establishment function and a signaling radio bearer establishment function.

In a possible implementation, the radio bearer release may include data radio bearer release and/or signaling radio bearer release. Based on the foregoing solution, the RAL layer may have a data radio bearer release function and a signaling radio bearer release function.

According to a fifth aspect, a communication apparatus is provided. The apparatus may include modules/units configured to perform any one of the first aspect or the possible implementations of the first aspect, may include modules/units configured to perform any one of the second aspect or the possible implementations of the second aspect, may include modules/units configured to perform any one of the third aspect or the possible implementations of the third aspect, or may include modules/units configured to perform any one of the fourth aspect or the possible implementations of the fourth aspect, for example, a processing unit and an input/output unit.

For example, when the apparatus includes the modules/units configured to perform any one of the first aspect or the possible implementations of the first aspect, the input/output unit is configured to obtain first physical layer control information, where the first physical layer control information includes N pieces of first information, and N is greater than or equal to 2. The processing unit is configured to obtain target first information from the N pieces of first information, where the target first information indicates a frequency domain resource of a first channel. The processing unit is further configured to estimate the first channel based on the target first information. The input/output unit is further configured to obtain second physical layer control information, where the second physical layer control information includes signaling information that is used by the first communication apparatus to send feedback information corresponding to the first channel. The input/output unit is further configured to send the feedback information based on the second physical layer control information.

In a design, the processing unit is further configured to perform channel estimation on a second channel based on a demodulation reference signal DMRS of the second channel, where the second channel includes the first physical layer control information.

In a design, when being configured to estimate the first channel based on the target first information, the processing unit is specifically configured to: perform channel estimation on the first channel based on the DMRS of the second channel.

In a design, when being configured to estimate the first channel based on the target first information, the processing unit is specifically configured to: perform channel estimation on the first channel based on a DMRS symbol corresponding to the first channel.

In a design, a subcarrier spacing of the DMRS symbol is greater than a subcarrier spacing of a second channel, or a subcarrier spacing of the DMRS symbol is greater than a subcarrier spacing of the first channel.

In a design, a time-frequency resource of the second channel is M control channel elements CCEs, and M is greater than or equal to 1.

In a design, the subcarrier spacing of the first channel is less than the subcarrier spacing of the second channel.

In a design, the input/output unit is further configured to obtain third physical layer control information, where the third physical layer control information includes at least one of the following: a hybrid automatic repeat request HARQ process number, a new data indicator NDI, a modulation and coding scheme, a transport block size, or precoding matrix information of the first channel.

For example, when the apparatus includes the modules/units configured to perform any one of the second aspect or the possible implementations of the second aspect, the input/output unit is configured to send first physical layer control information, where the first physical layer control information includes N pieces of first information, N is greater than or equal to 2, the N pieces of first information include target first information corresponding to a first channel, and the target first information includes indication information of a frequency domain resource of the first channel. The processing unit is configured to generate the first channel based on the target first information. The input/output unit is further configured to send the first channel. The input/output unit is further configured to send second physical layer control information, where the second physical layer control information includes signaling information of feedback information of the first channel. The input/output unit is further configured to receive the feedback information.

In a design, the input/output unit is further configured to send third physical layer control information, where the third physical layer control information includes at least one of the following: a hybrid automatic repeat request HARQ process number, a new data indicator NDI, a modulation and coding scheme, a transport block size, or precoding matrix information of the first channel.

In a design, the target first information further includes at least one of the following: indication information of a time domain resource of the first channel, pilot information of the first channel, precoding matrix information of the first channel, or a modulation and coding scheme.

In a design, the signaling information includes at least one of the following: power control information of a channel carrying the feedback information, resource information of the channel carrying the feedback information, or format information of the channel carrying the feedback information.

In a design, the second physical layer control information further includes at least one of the following: a hybrid automatic repeat request HARQ process number, a new data indicator NDI, a modulation and coding scheme, a transport block size, or precoding matrix information of the first channel.

In a design, the first physical layer control information is scrambled by a radio network temporary identifier RNTI.

In a design, the RNTI is an RNTI of a group to which the first communication apparatus belongs.

In a design, the second physical layer control information is the second physical layer control information of the group, and the second physical layer control information of the group includes the second physical layer control information corresponding to the first communication apparatus.

In a design, the second physical layer control information is carried on the first 1 to T symbols of the first channel.

In a design, the feedback information includes HARQ acknowledgment information and/or channel state information CSI.

For example, when the apparatus includes the modules/units configured to perform any one of the third aspect or the possible implementations of the third aspect, the processing unit is configured to obtain a first bit stream from an application layer or a non-access stratum NAS layer. The processing unit is further configured to input the first bit stream to a radio access layer RAL layer for RAL layer function processing to generate a second bit stream, where the second bit stream includes an RAL header and the first bit stream. The RAL function processing includes at least data transfer. The processing unit is further configured to input the second bit stream to a radio physical layer for radio physical layer function processing to generate a third bit stream, where the radio physical layer function processing includes at least channel coding. The input/output unit is configured to send the third bit stream.

In a design, the RAL header includes first information, where the first information indicates whether the first bit stream is a data bearer or a signaling bearer. Alternatively, the first information indicates at least two logical channel identities, a first logical channel identity in the at least two logical channel identities corresponds to a data bearer, and a second logical channel identity corresponds to a signaling bearer. Alternatively, the first information indicates that the first bit stream is from the application layer, or the first information indicates that the first bit stream is from the NAS layer.

In a design, the second bit stream includes a message authentication code for integrity part, and the message authentication code for integrity part is appended to the first bit stream.

In a design, the RAL header in the second bit stream precedes the first bit stream.

In a design, the RAL layer function processing further includes at least one of the following: entity establishment, entity release, hybrid automatic repeat request HARQ, radio bearer release, radio bearer establishment, exception handling, event triggering, paging channel message reception, broadcast channel reception, RAL duplication, Ethernet header compression, timing advance, random access, or data volume calculation.

In a design, the radio bearer establishment includes data radio bearer establishment and/or signaling radio bearer establishment.

In a design, the radio bearer release includes data radio bearer release and/or signaling radio bearer release.

For example, when the apparatus includes the modules/units configured to perform any one of the fourth aspect or the possible implementations of the fourth aspect, the input/output unit is configured to receive a fourth bit stream. The processing unit is configured to input the fourth bit stream to a radio physical layer for radio physical layer function processing to generate a fifth bit stream, where the fifth bit stream includes an RAL header and a sixth bit stream, and the radio physical layer function processing includes at least channel decoding. The processing unit is further configured to input the fifth bit stream to a radio access layer RAL layer for RAL layer function processing to generate the sixth bit stream, where the RAL function processing includes at least data transfer. The processing unit is further configured to transmit the sixth bit stream to an application layer or a non-access stratum NAS layer.

In a design, the RAL header includes first information, where the first information indicates whether the fourth bit stream is a data bearer or a signaling bearer. Alternatively, the first information indicates at least two logical channel identities, a first logical channel identity in the at least two logical channel identities corresponds to a data bearer, and a second logical channel identity corresponds to a signaling bearer. Alternatively, the first information indicates that the fourth bit stream is from the application layer or the NAS layer.

In a design, the fifth bit stream includes a message authentication code for integrity part, the message authentication code for integrity part is located in the last 1 to K bytes in the fifth bit stream, and K is greater than or equal to 1.

In a design, the RAL header in the fifth bit stream precedes the sixth bit stream.

In a design, the RAL layer function processing further includes at least one of the following: entity establishment, entity release, hybrid automatic repeat request HARQ, radio bearer release, radio bearer establishment, exception handling, event triggering, paging channel message reception, broadcast channel reception, RAL duplication, Ethernet header compression, timing advance, random access, or data volume calculation.

In a design, the radio bearer establishment includes data radio bearer establishment and signaling radio bearer establishment.

In a design, the radio bearer release includes data radio bearer release and signaling radio bearer release.

According to a sixth aspect, a communication apparatus is provided. The communication apparatus includes a processor and a transceiver. The transceiver performs receiving and sending operations in the method according to any one of the first aspect or the possible implementations of the first aspect, performs receiving and sending operations in the method according to any one of the second aspect or the possible implementations of the second aspect, performs receiving and sending operations in the method according to any one of the third aspect or the possible implementations of the third aspect, or performs receiving and sending operations in the method according to any one of the fourth aspect or the possible implementations of the fourth aspect. When a controller runs, the processor performs, by using a hardware resource in the controller, a processing operation other than the sending and receiving operations in the method according to any one of the first aspect or the possible implementations of the first aspect, or a processing operation other than the sending and receiving operations in the method according to any one of the second aspect or the possible implementations of the second aspect, a processing operation other than the sending and receiving operations in the method according to any one of the third aspect or the possible implementations of the third aspect, or a processing operation other than the receiving and sending operations in the method according to any one of the fourth aspect or the possible implementations of the fourth aspect.

In a possible implementation, the communication apparatus further includes a memory. The memory may be located inside the apparatus, or may be located outside the apparatus and connected to the apparatus.

In a possible implementation, the memory may be integrated with the processor.

According to a seventh aspect, a chip is provided. The chip includes a logic circuit and a communication interface.

In a design, the communication interface is configured to input first physical layer control information that is from a second communication apparatus, where the first physical layer control information includes N pieces of first information, and N is greater than or equal to 2. The logic circuit is configured to obtain target first information from the N pieces of first information, where the target first information includes indication information of a frequency domain resource of a first channel. The logic circuit is further configured to estimate the first channel based on the target first information. The communication interface is further configured to input second physical layer control information that is from the second communication apparatus, where the second physical layer control information includes signaling information that is used by a first communication apparatus to send feedback information.

In a design, the communication interface is configured to output first physical layer control information, where the first physical layer control information includes N pieces of first information, N is greater than or equal to 2, the N pieces of first information include target first information corresponding to a first communication apparatus, and the target first information includes indication information of a frequency domain resource of a first channel. The logic circuit is configured to generate the first channel based on the target first information. The communication interface is further configured to output the first channel. The communication interface is further configured to output the second physical layer control information, where the second physical layer control information includes the signaling information of the feedback information of the first communication apparatus.

In a design, the logic circuit is configured to obtain a first bit stream from an application layer or a non-access stratum NAS layer. The logic circuit is further configured to input the first bit stream to a radio access layer RAL layer and perform processing on the first bit stream based on a protocol stack of the RAL layer to generate a second bit stream, where the protocol stack of the RAL layer includes the following functions: entity establishment, entity release, and data transfer. The logic circuit is further configured to input the second bit stream to a radio physical layer for radio physical layer function processing to generate a third bit stream, where the radio physical layer function processing includes at least channel coding. The communication interface is configured to output the third bit stream to a second communication apparatus.

In a design, the communication interface is configured to input a fourth bit stream that is from a second communication apparatus. The logic circuit is further configured to input the fourth bit stream to a radio physical layer for radio physical layer function processing to generate a fifth bit stream, where the radio physical layer function processing includes at least channel decoding. The logic circuit is further configured to input the fifth bit stream to a radio access layer RAL layer and perform processing on the fifth bit stream based on a protocol stack of the RAL layer to generate a sixth bit stream, where the protocol stack of the RAL layer includes the following functions: entity establishment, entity release, and data transfer. The logic circuit further configured to transmit the sixth bit stream to an application layer or a non-access stratum NAS layer

According to an eighth aspect, this application provides a computer-readable storage medium. The computer-readable storage medium stores instructions. When the instructions are run on a computer, the computer is enabled to perform the methods according to the foregoing aspects.

According to a ninth aspect, this application provides a computer program product storing instructions. When the computer program product runs on a computer, the computer is enabled to perform the methods according to the foregoing aspects.

According to a tenth aspect, this application provides a computer program storing instructions. When the computer program is run on a computer, the methods according to the foregoing aspects are performed.

According to an eleventh aspect, this application provides a communication system, including at least one first communication apparatus and at least one second communication apparatus.

In addition, for beneficial effects of the fifth aspect to the eleventh aspect, refer to the beneficial effects in the first aspect to the fourth aspect.

### BRIEF DESCRIPTION OF DRAWINGS

FIG. 1A is an example flowchart of a hybrid automatic repeat request technology;
FIG. 1B is a schematic diagram of a user plane protocol stack;
FIG. 2 is an example flowchart of downlink physical layer control information processing;
FIG. 3 is a schematic diagram of a communication system according to an embodiment of this application;
FIG. 4 is an example flowchart of a physical layer control information transmission method according to an embodiment of this application;
FIG. 5A is an example flowchart of a physical layer control information processing method according to an embodiment of this application;
FIG. 5B is an example flowchart of a physical layer control information processing method according to an embodiment of this application;
FIG. 5C is an example flowchart of a physical layer control information processing method according to an embodiment of this application;
FIG. 5D is an example flowchart of a physical layer control information processing method according to an embodiment of this application;
FIG. 5E is an example flowchart of a physical layer control information processing method according to an embodiment of this application;
FIG. 5F is an example flowchart of a physical layer control information processing method according to an embodiment of this application;
FIG. 6 is a schematic diagram of a second channel according to an embodiment of this application;
FIG. 7 is an example flowchart of a physical layer control information transmission method according to an embodiment of this application;
FIG. 8 is an example flowchart of a data transmission method according to an embodiment of this application;
FIG. 9A is a schematic diagram of a second bit stream according to an embodiment of this application;
FIG. 9B is a schematic diagram of a second bit stream according to an embodiment of this application;
FIG. 9C is a schematic diagram of a second bit stream according to an embodiment of this application;
FIG. 10A shows a user plane protocol stack according to an embodiment of this application;
FIG. 10B shows a user plane protocol stack according to an embodiment of this application;
FIG. 11 is a schematic diagram of an apparatus according to an embodiment of this application;
FIG. 12 is a schematic diagram of an apparatus according to an embodiment of this application; and
FIG. 13 is a schematic diagram of a chip according to an embodiment of this application.

### DESCRIPTION OF EMBODIMENTS

The following explains and describes technical terms in embodiments of this application.
1. A terminal device includes a device that provides a user with voice and/or data connectivity, for example, may include a handheld device with a wireless connection function, or a processing device connected to a wireless modem. The terminal device may communicate with a core network via a radio access network (radio access network, RAN), and exchange voice and/or data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communications (machine-to-machine /machine-type communications, M2M/MTC) terminal device, an internet of things (internet of things, loT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may include a mobile phone (or referred to as a "cellular" phone), a computer with a mobile terminal device, or a portable, pocket-sized, handheld, or computer built-in mobile apparatus, such as a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a virtual reality (virtual reality, VR) terminal device, augmented reality (augmented reality, AR) terminal device, a terminal in industrial control (industrial control), a terminal in self-driving (self-driving), a terminal in remote medical (remote medical), a terminal in a smart grid (smart grid), a terminal in transportation safety (transportation safety), and a terminal in a smart city (smart city), and a terminal in a smart home (smart home). The terminal device further includes a limited device, for example, a device with relatively low power consumption, a device with a limited storage capability, or a device with a limited computing capability. For example, the device includes an information sensing device such as a barcode, radio frequency identification (radio frequency identification, RFID), a sensor, a global positioning system (global positioning system, GPS), or a laser scanner, and further includes a device such as a satellite, an aircraft, a drone, or a balloon.

As an example instead of a limitation, in embodiments of this application, the terminal device may alternatively be a wearable device. The wearable device may also be referred to as a wearable intelligent device, an intelligent wearable device, or the like, and is a general term of devices that are wearable and that are developed by using a wearable technology to perform intelligent design on daily wearing, such as glasses, gloves, a watch, clothing, and shoes. The wearable device is a portable device that is directly worn on a body or integrated into clothes or accessories of a user. The wearable device not only is a hardware device, but also implements powerful functions through software support and data interaction or cloud interaction. Generalized wearable intelligent devices include full-featured and large-size devices, such as smart watches or smart glasses, that can implement complete or partial functions without depending on smartphones, and devices, such as various smart bands, smart helmets, or smart jewelry for monitoring physical signs, that focus on only one type of application functions and need to work with other devices such as smartphones.

2. A network device includes, for example, an access network (access network, AN) device such as a base station (for example, an access point), and may be a device that communicates with a wireless terminal device over an air interface through one or more cells in an access network. Alternatively, for example, a network device in a V2X technology is a road side unit (road side unit, RSU). The base station may be configured to mutually convert a received over-the-air frame and an internet protocol (IP) packet and serve as a router between the terminal device and a rest portion of the access network, where the rest portion of the access network may include an IP network. The RSU may be a fixed infrastructure entity that supports a V2X application, and may exchange a message with another entity that supports the V2X application. The network device may further coordinate attribute management of an air interface. For example, the network device may include an evolved NodeB (NodeB, eNB, or e-NodeB, evolutional NodeB) in a long term evolution (long term evolution, LTE) system or a long term evolution-advanced (long term evolution-advanced, LTE-A) system, may include a next generation NodeB (next generation node B, gNB) in a 5G NR system, or may include a central unit (centralized unit, CU) and a distributed unit (distributed unit, DU) in a cloud access network (cloud radio access network, Cloud RAN) system. The network device further includes a device that undertakes a base station function in device-to-device (Device-to-Device, D2D), vehicle-to-everything (vehicle-to-everything, V2X), machine-to-machine (machine-to-machine, M2M) communication, and internet of things (Internet of Things) communication, and further includes a device such as a satellite, an aircraft, a drone, or a balloon. This is not limited in embodiments of this application.

3. Terms "system" and "network" in embodiments of this application may be used interchangeably. "A plurality of' means two or more, and other quantifiers are similar. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of) ..." means one or any combination of subsequent associated objects. For example, "at least one of A, B, and C" includes A, B, C, AB, AC, BC, or ABC.

With reference to the accompanying drawings, the following describes technical solutions provided in embodiments of this application.

Ultra-reliability and low-latency communication (ultra-reliability low latency communication, URLLC) is one of important application scenarios of the 5th generation mobile communication technology (5th generation mobile network, 5G). URLLC features low latency and high reliability, and therefore is widely used in fields such as autonomous driving, industrial manufacturing, the internet of vehicles, and smart grids.

URLLC has a wide application scope, and requires different latency, reliability, and bandwidth in different scenarios, such as "telemetering, telesignaling, and telecontrol" of a power automation scenario, an internet of vehicles scenario, and an industrial manufacturing scenario. The following uses the industrial manufacturing scenario as an example to describe requirements on latency and reliability in different scenarios.

Manufacturing devices in smart factories can connect to enterprise cloud or onsite control systems through wireless networks to collect onsite environment data and production data, analyze production statuses in real time, and implement unattended and wireless production lines. Smart factories have high requirements for latency and stability of workshop equipment. For example, if there are no more than 50 devices in a service area, in end-to-end latency of 1 ms, communication service availability (communication system available, CSA) of a data packet whose size is 40 bytes needs to be between 99.9999% and 99.999999%.

The following technical solutions are designed in 5G to meet a performance requirement of URLLC for high reliability under a specific latency limit.
1. A fast hybrid automatic repeat request (hybrid automatic repeat request) processing feedback capability of a terminal is introduced in new radio (new radio, NR). After data of a URLLC service arrives, a network device may dynamically schedule a resource to send a data packet of the URLLC service to the terminal device. If the network device receives a negative acknowledgement (non-acknowledge character, NACK) from the terminal device to the data packet, the network device may schedule a retransmission to improve reliability and correctness of data transmission. Apparently, a faster speed at which the terminal device feeds back a NACK/acknowledgement (acknowledge character, ACK) indicates that the network device has more time to schedule a retransmission when a condition of maximum end-to-end latency is met. The terminal device may perform HARQ combination by using the received retransmission and an initial transmission, so that reliability of a data packet can be effectively improved.

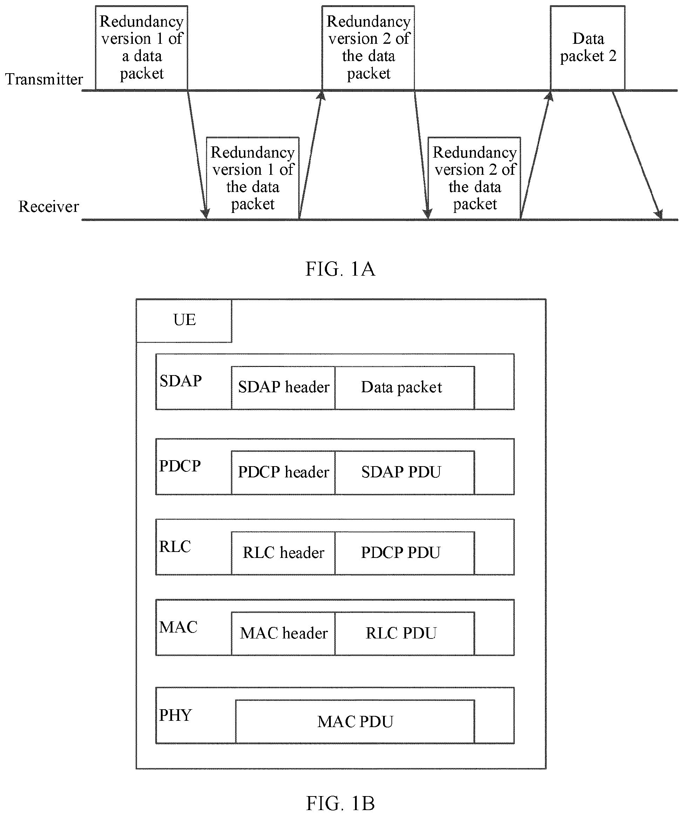

The following describes a retransmission scenario with reference to FIG. 1A. After performing channel coding on to-be-transmitted data, a transmitter selects a redundancy version and sends the redundancy version to a receiver. The receiver decodes a data packet of the received redundancy version and determines whether the redundancy version is correctly received. If the redundancy version is correctly received, a new data packet is requested. If the redundancy version is incorrectly received, a retransmission is requested. The transmitter may select another redundancy version for transmission. Refer to FIG. 1A. The transmitter sends a redundancy version 1 of a data packet 1 to the receiver, and the receiver receives and decodes the redundancy version 1 of the data packet 1, and determines whether the decoding is correct. If the decoding is incorrect, the receiver feeds back a NACK to the transmitter. After receiving the NACK, the transmitter learns that the receiver does not correctly receive the data packet 1, and selects a redundancy version 2 of the data packet 1 for retransmission. The receiver receives and decodes the redundancy version 2 of the data packet 1, and determines whether the decoding is correct. If the receiver performs decoding correctly, the receiver feeds back an ACK to the transmitter. After receiving the ACK sent by the receiver, the transmitter learns that the receiver has correctly received the data packet 1. Therefore, the transmitter may select a new data packet 2 for transmission.

### 2. Grant-free configuration

A grant-free technology and a corresponding transport block (transport block, TB) repetition technology are introduced in NR. A network device pre-configures an uplink/downlink periodic resource, and a plurality of resources may be configured in each periodicity. When a terminal device needs to send data, the terminal device may directly use these pre-configured uplink resources for transmission. The UE may repeatedly send a TB on a plurality of resources in one periodicity, to improve reliability. In the grant-free technology, time for sending a scheduling request to the network device, applying for a resource, and receiving feedback from the network device is reduced, thereby ensuring a low-latency requirement and a high-reliability requirement for sending URLLC data by the terminal device. When the network device needs to send data to the UE, the network device may directly use these pre-configured downlink resources for transmission. The terminal device does not need to blindly detect a physical downlink control channel (physical downlink control channel, PDCCH) to learn of information scheduled by downlink control information (downlink control information, DCI), but directly demodulates corresponding URLLC data, to effectively reduce latency of receiving the downlink data by the terminal device. However, the grant-free technology cannot accommodate a large quantity of terminal devices, and consequently, automation and wirelessization cannot be implemented in intelligent work.

Because time-frequency resources in a grant-free configuration are all configured by using higher layer signaling and are semi-statically configured, the time-frequency resources cannot match a current dynamic radio channel of the terminal device. In other words, spectral efficiency of the grant-free configuration is far lower than spectral efficiency of the foregoing technical solution 1 that is based on dynamic scheduling. However, in the foregoing technical solution 1, because the processing capability of the terminal device can allow only one HARQ transmission within 1 ms, and a block error rate (block error ratio, BLER) in an initial transmission is set to an excessively high value, resulting in low HARQ spectral efficiency.

In addition, there are many serial operations in a current user plane protocol stack. The current user plane protocol stack is for transmitting data of a terminal device, for example, application (application, APP) data, and may include a (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer.

Refer to FIG. 1B. A data packet delivered from an APP layer first passes through an SDAP layer, and an SDAP header (header) is added to the data packet, to finally form an SDAP protocol data unit (protocol data unit, PDU), which is transferred to a PDCP layer. The PDCP layer receives the SDAP PDU, and uses the SDAP PDU as a PDCP service data unit (service data unit, SDU). After the PDCP SDU is processed at the PDCP layer, a PDCP header is added, to finally form a PDCP PDU, which is transferred to an RLC layer. The RLC layer receives the PDCP PDU, and uses the PDCP PDU as an RLC SDU. After the RLC SDU is processed at the RLC layer, an RLC header is added, to finally form an RLC PDU, which is transferred to a MAC layer. The MAC layer receives the RLC PDU, and uses the RLC PDU as a MAC SDU. After the MAC SDU is processed at the MAC layer, a MAC header is added, to finally form a MAC PDU, which is transferred to a PHY layer. After receiving the MAC PDU from the MAC layer, the PHY layer performs encoding, and sends the MAC PDU through an air interface.

An NR user plane protocol stack is divided into a plurality of layers, and processing at each layer is complex. This increases extra header overheads. In addition, because serial processing is performed, large packet latency is caused.

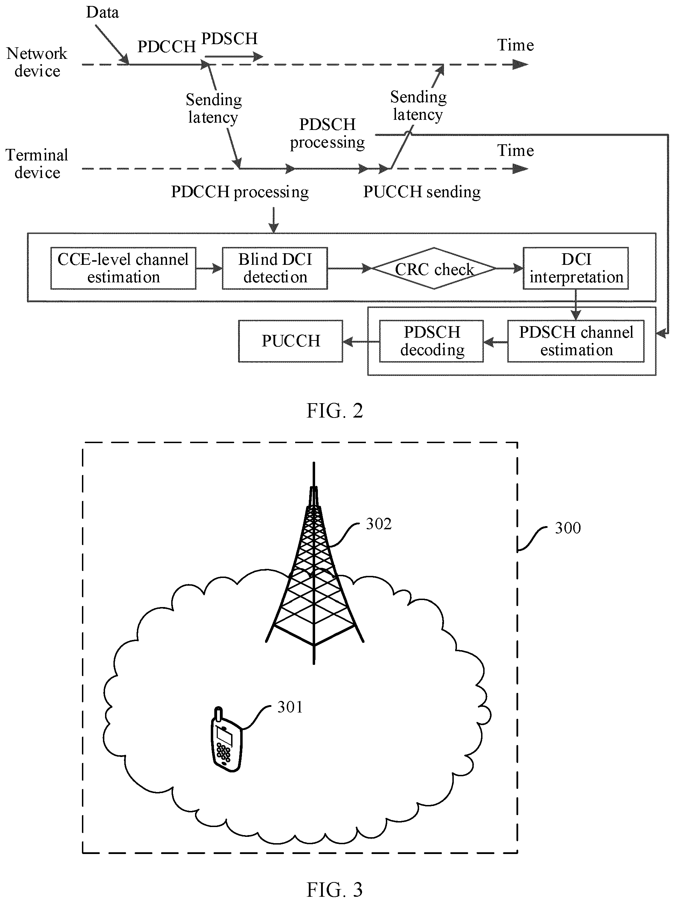

In addition, currently, when the terminal device performs channel estimation, processing time is also long. Refer to FIG. 2. A scenario in which a terminal device receives data from a network device is used as an example for description. The terminal device needs to perform channel estimation on a potential control channel element (control channel element, CCE), and blindly detect downlink control information (downlink control information, DCI). The terminal device may read the DCI, demodulate a physical downlink shared channel (physical downlink shared channel, PDSCH) scheduled by the network device, decode the PDSCH, and prepare a physical uplink control channel (physical uplink control channel, PUSCH). The foregoing process is serial processing based on an NR/LTE architecture, and has large latency.

Embodiments of this application provide a physical layer control information transmission method. The method may be applied to a communication service such as enhanced mobile broadband (enhanced Mobile Broadband, eMBB), massive machine type communication (massive Machine Type Communication, mMTC), and ultra-reliable and low-latency communication (Ultra-Reliable and Low-Latency Communication, URLLC) in a 5G communication system such as a long term evolution (English: Long Term Evolution, LTE for short) system or an NR system, and a future mobile communication system. For example, the method may be applied to a scenario such as unmanned driving or remote medical of a URLLC service, to reduce instruction overheads as much as possible while meeting requirements for high reliability and low latency.

To better understand embodiments of this application, the following uses a communication system shown in FIG. 3 as an example to describe in detail the communication system to which embodiments of this application are applicable. FIG. 3 is a schematic diagram of a communication system to which a physical layer control information transmission method according to an embodiment of this application is applicable. As shown in FIG. 3, the communication system 300 includes at least one terminal device 301 and at least one network device 302. A plurality of antennas may be configured for the terminal device 301 and the network device 302.

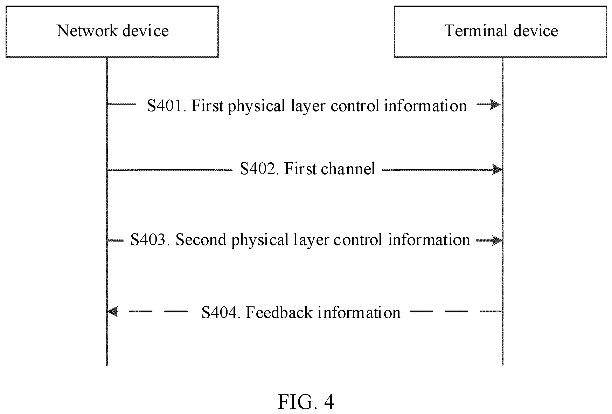

FIG. 4 is a flowchart of the method. In the following description process, an example in which the method is applied to the network architecture shown in FIG. 3 is used. In addition, the method may be performed by two communication apparatuses, and the two communication apparatuses are, for example, a first communication apparatus and a second communication apparatus. For ease of description, an example in which the method is performed by the network device and the terminal device is used below. In other words, an example in which the first communication apparatus is a terminal device and the second communication apparatus is a network device is used. It should be noted that this embodiment of this application is merely performed by using the network device and the terminal device as an example, and is not limited to this scenario.

S401. The network device sends first physical layer control information. Correspondingly, the terminal receives the first physical layer control information.

The first physical layer control information may include N pieces of first information. Herein, N may be greater than or equal to 2. Optionally, N may be greater than or equal to 1. The N pieces of first information may include target first information of the terminal device. The target first information may include indication information of a frequency domain resource of a first channel. The first channel may be for transmitting data, and may also be referred to as a data channel. For example, the first channel may be a PDSCH, or may be a receive channel (PRxSCH). It should be understood that the first channel is not limited to the foregoing plurality of channels, and may be a channel for data transmission in a future communication system. A time-frequency resource or control channel element (control channel element, CCE) location information of the first physical layer control information may be indicated by the network device, or may be specified in a communication protocol. This is not specifically limited in this application.

S402. The network device sends the first channel. Correspondingly, the terminal device receives the first channel.

Optionally, the first channel may include data to be transmitted to the terminal device. The terminal device may receive the first channel based on the target first information.

S403. The network device sends second physical layer control information. Correspondingly, the terminal device receives the second physical layer control information.

The second physical layer control information may include signaling information used by the terminal device to send feedback information. The signaling information may include at least one of the following: power control information of a channel carrying the feedback information, resource information of the channel carrying the feedback information, or format information of the channel carrying the feedback information. A time-frequency resource or CCE location information of the second physical layer control information may be indicated by the network device, or may be specified in a communication protocol. This is not specifically limited in this application.

It should be noted that, for the foregoing operations S402 and S403, S402 may be performed before S403, S403 may be performed before S402, or S402 and S403 may be simultaneously performed. S402 and S403 are performed after S401.

Optionally, the terminal device may determine, based on the second physical layer control information, the channel carrying the feedback information. The terminal device may determine, based on the power control information of the channel carrying the feedback information, the resource information of the channel carrying the feedback information, and/or the format information of the channel carrying the feedback information in the second physical layer control information, the channel carrying the feedback information. Optionally, the feedback information may be feedback information for the first channel. For example, the feedback information may be HARQ acknowledgment information of data of the first channel, or may be channel state information (channel state information, CSI) of the first channel. After decoding the first channel, the terminal device may determine the channel that carries the feedback information, and perform the following operation S404.

S404. The terminal device sends the feedback information. Correspondingly, the network device receives the feedback information.

In a possible implementation, the first physical layer control information is carried on a second channel, and the terminal device may blindly detect the first physical layer control information in a search space of the second channel. The second channel may be for transmitting physical layer control information, and may also be referred to as a control channel. For example, the second channel may be a PDCCH, may be a data channel for transmitting control information (enhanced PDCCH, EPDCCH), or may be a transmit channel (PTxCCH). It should be understood that the second channel is not limited to the PDCCH or the PTxCCH, and may also be a channel for transmitting physical layer control information in a future communication system.

In an example, the network device may indicate the scheduled second channel to the terminal device by using higher layer signaling. The higher layer may be understood as a higher layer protocol layer, and includes at least one protocol layer above a physical layer: a media access control (medium access control, MAC) layer, a radio access layer (radio access layer, RAL), a radio link control (radio link control, RLC) layer, a packet data convergence protocol (packet data convergence protocol, PDCP) layer, a radio resource control (radio resource control, RRC) layer, and a non-access stratum (non-access stratum, NAS). Correspondingly, in embodiments of this application, the higher layer signaling may be NAS signaling, an RRC message, or a media access control (media access control, MAC) control element (control element, CE). The RRC signaling may include dedicated RRC signaling or broadcast/multicast RRC signaling. This is not limited in embodiments of this application. For example, the network device may indicate the scheduled second channel to the terminal device by using the RRC signaling. The higher layer signaling may include a time-frequency resource or control channel element (control channel element, CCE) location information of the second channel. The terminal device may receive the second channel on the time-frequency resource or the CCE location information of the second channel that is indicated by the higher layer signaling.

Optionally, the higher layer signaling may further include a quantity of times that the terminal device blindly detects the first physical layer control information, or a quantity of blind detections corresponding to the first physical layer control information. The quantity of times that the terminal device blindly detects the first physical layer control information may be a maximum value of the quantity of times of blindly detecting the first physical layer control information. Likewise, the quantity of blind detections corresponding to the first physical layer control information may be a maximum value of the quantity of blind detections. Based on the foregoing higher layer signaling, the terminal device may blindly detect the first physical layer control information in the search space of the second channel.

In another example, the time-frequency resource or the CCE location information of the second channel may be specified in a communication protocol. The terminal device may receive the second channel based on the time-frequency resource or the CCE location information of the second channel that is specified in the communication protocol. Optionally, a quantity of times that the terminal device blindly detects the first physical layer control information, or a quantity of times of blind detections corresponding to the first physical layer control information may further be specified in the communication protocol. This is not specifically limited in this application.

In this embodiment of this application, first information corresponding to the terminal device may include the indication information of the frequency domain resource of the first channel. Optionally, the first channel may include data to be transmitted to the terminal device. Therefore, the terminal device may receive the first channel based on the first information.

In an example, a time domain resource of the first channel may be indicated by higher layer signaling. For example, the network device may indicate the time domain resource of the first channel to the terminal device by using RRC signaling. For example, it may be indicated that the first channel is on a time domain symbol whose index is 2, 4, or 7. It should be understood that the network device may send, to the terminal device before sending the first physical layer control information, the higher layer signaling indicating the time domain resource of the first channel, may send, to the terminal device after sending the first physical layer control information, the higher layer signaling indicating the time domain resource of the first channel, or may send, to the terminal device when sending the first physical layer control information, the higher layer signaling indicating the time domain resource of the first channel. This is not limited in this application.

In another example, indication information of the time domain resource of the first channel may be included in the first information. Therefore, the first information corresponding to the terminal device may include the indication information of the time domain resource and the frequency domain resource of the first channel. In this case, the terminal device may receive the first channel based on the first information.

In a possible implementation, in this embodiment of this application, physical layer control information of the terminal device may be sent to the terminal device separately by using different messages. The following separately describes, in three cases, the physical layer control information transmission method provided in this embodiment of this application.

### Case 1:

The target first information corresponding to the terminal device may include physical layer control information for demodulating the first channel. For example, the indication information of the frequency domain resource of the first channel may be included. Optionally, the first information may further include at least one of the following: the indication information of the time domain resource of the first channel and pilot information of the first channel. The pilot information of the first channel may be, for example, information about a channel state information reference signal (channel state information reference signal, CSI-RS) and/or information about a demodulation reference signal (demodulation reference signal, DMRS).

In a possible implementation, the first physical layer control information may include first information of another device in a group to which the terminal device belongs. The network device may include first information of a plurality of terminal devices in a group of devices in the first physical layer control information, and send the first physical layer control information to the group of devices. The network device may unicast the first physical layer control information to each terminal device, or may multicast the first physical layer control information to the group of device devices. Alternatively, the target first information corresponding to the terminal device may be understood as a piece of physical layer control information of the terminal device, and the first physical layer control information may be understood as group-first physical layer control information. In other words, it may be understood that the physical layer control information of the terminal device is included in group-physical layer control information of the group to which the terminal device belongs.

Optionally, the first physical layer control information may be first physical layer control information scrambled by a G-RNTI of a group of devices. In an example, the network device may allocate a group radio network temporary identifier (group-radio network temporary identifier, G-RNTI) to a plurality of terminal devices. The plurality of terminal devices may be considered as a group of devices. The network device may send, to a terminal device in the group of devices, the first physical layer control information scrambled by the G-RNTI. The terminal device may blindly detect the first physical layer control information based on the G-RNTI, to obtain the first information. The network device may separately unicast, to each terminal device in the group of devices, the first physical layer control information scrambled by the G-RNTI, or may multicast, to the plurality of terminal devices in the group of devices, the first physical layer control information scrambled by the G-RNTI.

If the first physical layer control information includes first information of a plurality of terminal devices, location information of first information of a terminal device in the first physical layer control information may be specified in a communication protocol. For example, the first physical layer control information includes N information blocks, where N is greater than or equal to 2. One information block corresponds to first information of one terminal device. One of the N information blocks carries the target first information of the terminal device. When receiving the target first information, the terminal device needs to know location information, in the first physical layer control information, of an information block that carries the target first information of the terminal device, where the location information is, for example, an index of the information block. For example, the terminal device may determine, based on a predefined formula or calculation manner, location information of the first information corresponding to the terminal device in the first physical layer control information. For example, the terminal device may obtain, based on a C-RNTI of the terminal device and the foregoing predefined formula or calculation manner, an index of an information block carrying the first information. For example, an information block index (block index) is equal to a remainder of C-RNTIB, where B may represent a total quantity of information blocks of the first physical layer control information, and B is an integer greater than 0. Optionally, B=1. Alternatively, the terminal device may determine, based on time-frequency information that carries the first physical layer control information, the index of the information block that carries the first information. The time-frequency information may be an index of a slot, an index of a time domain symbol, an index of a carrier, or the like. Alternatively, the terminal device may determine, based on the C-RNTI and the time-frequency information that carries the first physical layer control information, the index of the information block that carries the first information. For example, block index=f(C-RNTI, symbol index/slot index/frame index).

It should be understood that the foregoing formula or calculation manner and parameters are all examples, and do not constitute a limitation on determining, by the terminal device, the location information of the first information in the first physical layer control information. In this embodiment of this application, another method and parameter may be alternatively for determining the location information of the first information of the terminal device in the first physical layer control information.

In another example, if the first physical layer control information includes first information of a plurality of terminal devices, location information of first information of a terminal device in the first physical layer control information may be indicated by the network device to the terminal device. For example, the network device may indicate, to the terminal device by using RRC signaling, the location information of the first information of the terminal device in the first physical layer control information. For example, the location information of the first information in the first physical layer control information may be indicated to the terminal device by using RRC configuration (configuration) signaling.

It should be noted that a larger search space of the second channel that carries the first physical layer control information indicates a lower probability of collision and blocking of the first physical layer control information, and therefore indicates higher data transmission reliability. However, a larger search space of the second channel carrying the first physical layer control information indicates a larger quantity of times of blind detection performed by the terminal device on the first physical layer control information. This leads to larger processing latency of the terminal device and a smaller quantity of HARQ transmissions that can be supported within a maximum latency. However, there is a low probability that data on which HARQ retransmission needs to be performed for a plurality of times is correctly transmitted within the maximum latency.

However, in the foregoing method, the first physical layer control information may include the first information of the plurality of terminal devices. For example, one service area or a cellular cell includes 50 terminal devices, and 10 terminal devices are in a group. Even if all the 50 terminal devices are scheduled, there is only five pieces of first physical layer control information. In this case, a probability that the first physical layer control information collides is very low. Therefore, a search space for each piece of first physical layer control information may be small. Assuming that one piece of first physical layer control information corresponds to only one search location, a quantity of blind detections corresponding to the first physical layer control information may be 0. This can reduce processing time of the terminal device. Usually, a quantity of blind detections corresponding to one piece of first physical layer control information may be 0 to 4. In this way, a probability of collision and blocking of the first physical layer control information can be reduced while reducing processing time of the terminal device, and a quantity of times that the terminal device blindly detects the first physical layer control information can also be reduced.

Optionally, the first physical layer control information may include a cyclic redundancy check (cyclic redundancy check, CRC) code. A plurality of terminal devices in a group of devices may check the first physical layer control information by using a same CRC code, and obtain first information of the plurality of terminal devices from the first physical layer control information. Based on the foregoing solution, system overheads of physical layer control information can be effectively reduced. A size of a payload (payload) of the first physical layer control information may be specified in a communication protocol, or may be configured by the network device by using RRC signaling.

The network device may further send the second physical layer control information to the terminal device, where the second physical layer control information may include the signaling information for sending the feedback information by the terminal device. The signaling information may include at least one of the following: the power control information of the channel carrying the feedback information, the resource information of the channel carrying the feedback information, or the format information of the channel carrying the feedback information. Optionally, the second physical layer control information may further include timing information of the feedback information, information for triggering aperiodic CSI, information for triggering an uplink reference signal (for example, a sounding reference signal, SRS), and/or the like.

In an example, the second physical layer control information may be carried in the first channel scheduled by using the first information. For example, the second physical layer control information may be carried on the first 1 to T time domain symbols of the first information, where T is greater than or equal to 1. It should be noted that the first channel scheduled by using the first information may be understood as a first channel indicated by the indication information of the frequency domain resource included in the first information. Based on the foregoing solution, the terminal device may demodulate and read the second physical layer control information when demodulating the first channel based on the first information. Therefore, the terminal device may prepare, based on the second physical layer control information, the channel carrying the feedback information, so that time for sending the feedback information by the terminal device can be effectively reduced.

Optionally, the second physical layer control information may be scrambled by an RNTI. For example, the network device may allocate a cell-radio network temporary identifier (cell-radio network temporary identifier, C-RNTI) to the terminal device. The network device may send, to the terminal device, the second physical layer control information scrambled by the foregoing C-RNTI. The terminal device may blindly detect the second physical layer control information based on the C-RNTI.

In another example, the second physical layer control information may be carried in group-second physical layer control information of the group to which the terminal device belongs. Location information of the second physical layer control information of the terminal device in the group-second physical layer control information may be specified in a communication protocol. For example, the terminal device may determine the location information of the second physical layer control information of the terminal device in the group-second physical layer control information based on a predefined formula or calculation manner. For details, refer to the location information of the first information in the first physical layer control information shown in the case 1. Details are not described herein again.

Optionally, the group-second physical layer control information may be scrambled by an RNTI. For example, the network device may allocate one G-RNTI to a plurality of terminal devices. The plurality of terminal devices may be considered as a group of devices. The network device may send, to a terminal device in the group of devices, the group-second physical layer control information scrambled by the G-RNTI. The terminal device may blindly detect the group-second physical layer control information based on the G-RNTI, to obtain the second physical layer control information of the terminal device. The network device may separately unicast, to each terminal device in the group of devices, the group-second physical layer control information scrambled by the G-RNTI, or may multicast, to the plurality of terminal devices in the group of devices, the group-second physical layer control information scrambled by the G-RNTI.

Optionally, the second physical layer control information may further include information for decoding the first channel. For example, the second physical layer control information may include at least one of the following: a HARQ process number, a new data indicator (new data indicator, NDI), precoding matrix information (precoding matrix information, PMI) of the first channel, a modulation and coding scheme (modulation and coding scheme, MCS), a transport block size (transport block size, TBS), and the like.

The following briefly describes understanding and functions of the foregoing parameters.
1. One HARQ process means that the network device schedules one data transmission and then the network device receives ACK/NACK information. A quantity of HARQ processes is a quantity of concurrent HARQs. One HARQ entity includes N_{q} HARQ processes, where N_{q} is greater than or equal to 1. The network device needs to notify the terminal device of which HARQ process is for processing received data. Each HARQ process has an independent HARQ buffer at a receiver, and corresponds to different HARQ acknowledgment information. The terminal device may perform soft combination on received retransmitted data corresponding to a same HARQ process number. The HARQ process number indicates a HARQ process corresponding to current data. When decoding the first channel, the terminal device first needs to perform buffering, and determines whether to perform soft combination, that is, the HARQ process number is information for decoding the first channel.
2. The NDI indicates whether data transmitted on the first channel is new data or retransmitted data. If the data is retransmitted data, when decoding the first channel, the terminal device may perform soft combination on the data and previously received data, to improve reception performance.
3. The PMI indicates the precoding matrix information of the first channel. For example, the PMI may indicate an identifier of a codebook set, that is, the first channel is transmitted by using a precoding matrix corresponding to the identifier. Spatial multiplexing can be implemented by using a precoding matrix to transmit a channel. The network device may transmit different data for different terminal devices on a same time-frequency resource by using different PMIs, to improve a system throughput. In addition, a precoding matrix of a reference signal may be different from that of data by using a precoding matrix to transmit a channel. For example, the reference signal is sent by using a wide beam, and the data is sent by using a narrow beam, so that a beam transmission gain of the data can be further improved. When a PMI of data of the first channel is different from a PMI of a DMRS on the first channel, the terminal device needs to know the PMI. The terminal device may obtain more accurate channel estimation of the first channel by using the PMI, thereby improving performance of decoding the first channel by the terminal device.
4. The MCS indicates a modulation and coding scheme of the first channel. For example, if a modulation scheme of the data is indicated as QPSK, 16QAM, or the like, an information bit corresponding to a modulation symbol may be determined based on the modulation scheme when the first channel is decoded. For example, a bit rate of the data is indicated as 1/2, 2/3, or the like. When the first channel is decoded, the transport block size of the first channel may be determined based on the bit rate and the modulation scheme. The terminal device decodes the first channel based on the transport block size.
5. The TBS is for determining the transport block size of the first channel. A retransmitted TBS remains unchanged. Otherwise, soft combination cannot be performed.

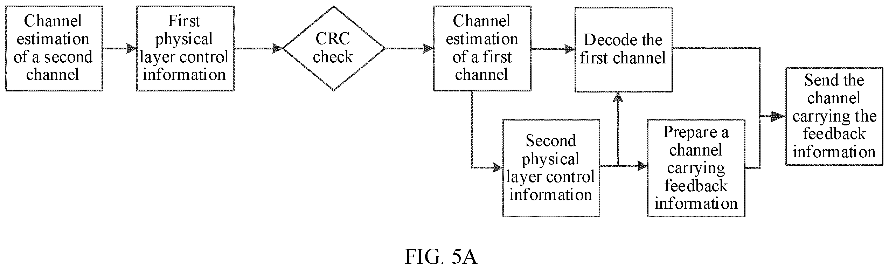

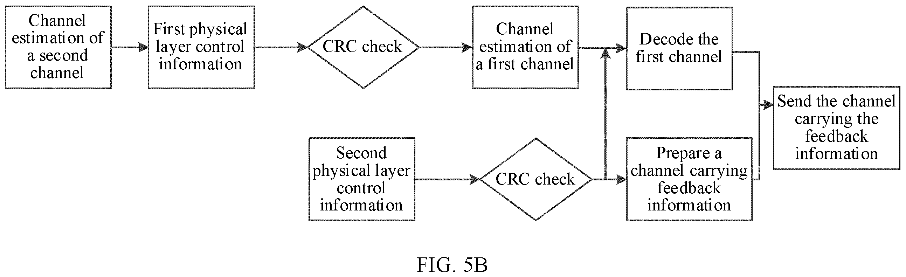

If the second physical layer control information does not include the TBS, the TBS may be indicated by the network device to the terminal device. Alternatively, the TBS may be obtained through processing based on the time-frequency resource of the scheduled first channel. Alternatively, the TBS may be related to the time-frequency resource of the scheduled first channel. An association relationship between the TBS and the time-frequency resource of the scheduled first channel may be specified in a communication protocol. The terminal device may determine the TBS based on the time-frequency resource of the scheduled first channel and the association relationship. A resource that is of a resource carrying the second physical layer control information and that is on the first channel scheduled by using the second physical layer control information may be specified in a communication protocol, or indicated by the network device to the terminal device, and/or a quantity of resource elements (resource elements, REs) occupied by the second physical layer control information may be specified in a communication protocol, or indicated by the network device to the terminal device. For example, a communication protocol may specify an offset (offset), and the terminal device may determine, based on the offset, the quantity of REs occupied by the second physical layer control information. Alternatively, the network device may indicate, to the terminal device by using RRC signaling, the quantity of REs occupied by the second physical layer control information, or indicate an offset. The offset may be an offset between an MCS of the second physical layer control information and an MCS of the first channel. Alternatively, the offset may be a ratio of a bit rate of the second physical layer control information to a bit rate of the first channel. The quantity, calculated by the terminal device based on the offset, of REs occupied by the second physical layer control information may be calculated according to a predefined formula. For example, Nre (Quantity of REs of the second physical layer control information) = (RE of the first channel)*(Quantity of bits of the first channel)/(Quantity of bits of the second physical layer control information). Optionally, the quantity of bits of the second physical layer control information is a quantity of original information bits and a quantity of bits of an additional CRC. The following describes the foregoing case 1 by using FIG. 5A and FIG. 5B.

For example, refer to FIG. 5A. The terminal device may perform blind detection on the second channel to obtain the first physical layer control information, and optionally, may obtain the first information after successfully performing CRC code check on the first physical layer control information. The terminal device may determine the time-frequency resource of the first channel based on the first information, to receive the first channel based on the time-frequency resource of the first channel. For example, the terminal device may perform channel estimation on the first channel based on a DMRS of the second channel or a DMRS on a DMRS symbol, and the terminal device may decode the first channel based on at least one of information such as the HARQ process number, the NDI, the PMI, and the MCS. In addition, the terminal device may prepare, based on the second physical layer control information carried on the first 1 to T time domain symbols of the first channel, the channel carrying the feedback information. For example, the terminal device may prepare, based on the power control information and the format information, feedback information that meets the power control information and the format information, and the terminal device may determine, based on the resource information, the channel that carries the feedback information. In this way, after decoding the first channel, the terminal device may send the channel carrying the feedback information.

For example, refer to FIG. 5B. The terminal device may perform blind detection on the second channel to obtain the first physical layer control information, and optionally, may obtain the first information after successfully performing CRC code check on the first physical layer control information. The terminal device may blindly detect the group-second physical layer control information, and obtain the second physical layer control information of the terminal device that is carried in the group-second physical layer control information. The terminal device may determine the time-frequency resource of the first channel based on the first information, to receive the first channel based on the time-frequency resource of the first channel. The terminal device may perform channel estimation on the first channel, and decode the first channel. For example, the terminal device may perform channel estimation on the first channel based on a DMRS of the second channel or a DMRS on a DMRS symbol, and the terminal device may decode the first channel based on at least one of information such as the HARQ process number, the NDI, the PMI, and the MCS. In addition, the terminal device may prepare, based on at least one of the power control information, the resource information, and the format information in the second physical layer control information, the channel carrying the feedback information. In this way, after decoding the first channel, the terminal device may send the channel carrying the feedback information.

It can be learned from FIG. 5A and FIG. 5B that, the terminal device may perform, by using the first information and the second physical layer control information, in parallel processing operations of estimating and decoding the first channel and preparing the channel that carries the feedback information. Therefore, the processing latency of the terminal device can be effectively reduced.

### Case 2:

The first information corresponding to the terminal device may include physical layer control information for demodulating the first channel. For example, the indication information of the frequency domain resource of the first channel may be included. Optionally, the first information may further include at least one of the following: the indication information of the time domain resource of the first channel and pilot information of the first channel. The pilot information of the first channel may be, for example, CSI-RS information and/or DMRS information. For details, refer to related descriptions in the foregoing case 1. Optionally, the first information may be carried in the first physical layer control information, and the first physical layer control information may be scrambled by an RNTI. For details, refer to related descriptions in the foregoing case 1. Details are not described herein again. Optionally, the first physical layer control information may include first information of another device in the group to which the terminal device belongs. For details, refer to related descriptions in the foregoing case 1. Details are not described herein again.

In a possible implementation, in addition to the foregoing described information, the first information may further include at least one of the following: a HARQ process number, an NDI, a PMI of the first channel, an MCS, and a TBS. For related descriptions of the TBS, refer to the foregoing case 1. Details are not described herein again. For explanations and functions of these parameters, refer to related descriptions in the foregoing case 1. Details are not described herein again.

Based on the foregoing solution, information such as the PMI and the MCS of the first channel may be included in the first information and sent to the terminal device along with the first physical layer control information. In this way, the terminal device can obtain information for demodulating the data channel and information for decoding the first channel together, to joint implement channel estimation of the data channel and decoding of the data channel, thereby improving a decoding success rate, that is, effectively reducing a block error rate of the data channel.

The network device may further send the second physical layer control information to the terminal device, where the second physical layer control information may include the signaling information for sending the feedback information by the terminal device. For details, refer to related descriptions in the foregoing case 1. Optionally, the second physical layer control information may further include timing information of the feedback information, information for triggering aperiodic CSI, information for triggering an SRS, and/or the like. The second physical layer control information may be carried in the first channel scheduled by using the first information, or may be carried in group-second physical layer control information. For details, refer to related descriptions in the foregoing case 1. In addition, for a resource that is of a resource carrying the second physical layer control information and that is on the first channel scheduled by using the second physical layer control information and a quantity of REs occupied by the second physical layer control information, refer to related descriptions in the foregoing case 1. Details are not described herein again.

It should be noted that information such as the HARQ process number, the NDI, and the PMI and the MCS of the first channel may be included in the first information, or may be carried in the second physical layer control information, and does not need to be included in both the first information and the second physical layer control information. If the PMI is included in the first information, an operation of performing channel equalization on the data of the first channel may be performed by a demodulation module. The demodulation module of the terminal device may multiply a channel estimation result of the first channel by a PMI matrix, to perform channel equalization on the data of the first channel. If the PMI is included in the second physical layer control information, the operation of performing channel equalization on the data of the first channel may be performed by a decoding module. A demodulation module may output a channel estimation result of the first channel, and the decoding module may perform channel equalization on the data of the first channel based on the channel estimation result output by the demodulation module multiplied by a PMI matrix. Because the first information includes at least the indication information of the frequency domain resource of the first channel, and the frequency domain resource requires a large quantity of bits, if a piece of physical layer control information has a large payload, reliability of the physical layer control information cannot be ensured. The foregoing information such as the HARQ process number, the NDI, and the MCS has a small quantity of bits, and therefore may be included in the first information. However, the PMI has a large quantity of bits, and therefore may be carried in the second physical layer control information. Optionally, the information such as the HARQ process number, the NDI, and the MCS may alternatively be carried in the second physical layer control information, as shown in the foregoing case 1. Details are not described herein again.

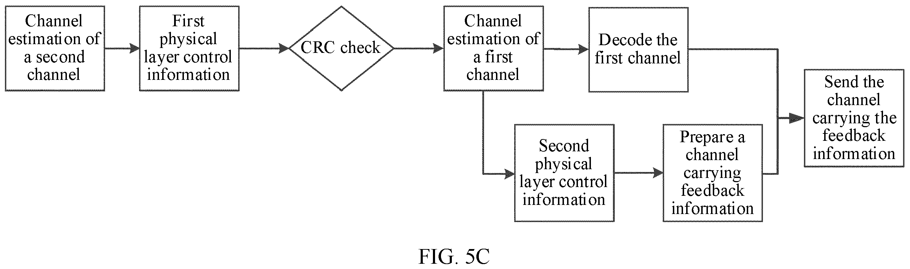

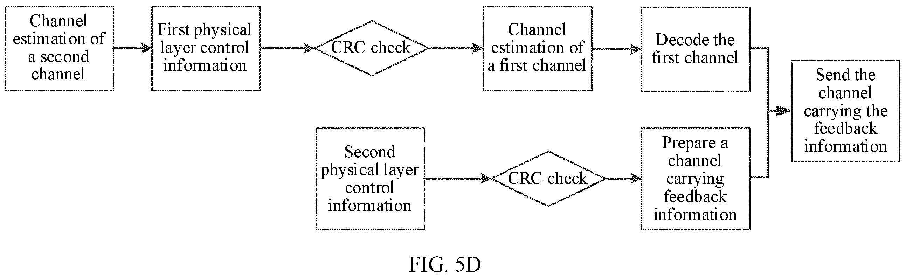

The following describes the foregoing case 2 by using FIG. 5C and FIG. 5D. For example, refer to FIG. 5C. The terminal device may perform blind detection on the second channel to obtain the first physical layer control information, and optionally, may obtain the first information after successfully performing CRC code check on the first physical layer control information. The terminal device may determine the time-frequency resource of the first channel based on the first information, to receive the first channel based on the time-frequency resource of the first channel. The terminal device may perform channel estimation on the first channel, and decode the first channel. In addition, the terminal device may prepare, based on the second physical layer control information carried on the first 1 to T time domain symbols of the first channel, the channel carrying the feedback information. For example, the terminal device may perform channel estimation on the first channel based on a DMRS of the second channel or a DMRS on a DMRS symbol. In addition, the terminal device may decode the first channel based on the information such as the HARQ process number, the NDI, the PMI, and the MCS, and the terminal device may prepare, based on at least one of the power control information, the resource information, and the format information in the second physical layer control information, the channel that carries the feedback information. In this way, after decoding the first channel, the terminal device may send the channel carrying the feedback information.

For example, refer to FIG. 5D. The terminal device may perform blind detection on the second channel to obtain the first physical layer control information, and optionally, may obtain the first information after successfully performing CRC code check on the first physical layer control information. The terminal device may blindly detect the group-second physical layer control information, and obtain the second physical layer control information of the terminal device that is carried in the group-second physical layer control information. The terminal device may determine the time-frequency resource of the first channel based on the first information, to receive the first channel based on the time-frequency resource of the first channel. The terminal device may perform channel estimation on the first channel, and decode the first channel. For example, the terminal device may perform channel estimation on the first channel based on a DMRS of the second channel or a DMRS on a DMRS symbol, and the terminal device may decode the first channel based on at least one of information such as the HARQ process number, the NDI, the PMI, and the MCS. In addition, the terminal device may prepare, based on at least one of the power control information, the resource information, and the format information in the second physical layer control information, the channel carrying the feedback information. In this way, after decoding the first channel, the terminal device may send the channel carrying the feedback information.

It can be learned from FIG. 5C and FIG. 5D that, the terminal device may perform, by using the first information and the second physical layer control information, in parallel processing operations of estimating and decoding the first channel and preparing the channel that carries the feedback information. Therefore, the processing latency of the terminal device can be effectively reduced.

### Case 3:

The first information of the terminal device may include physical layer control information for demodulating the first channel. For example, the indication information of the frequency domain resource of the first channel may be included. Optionally, the first information may further include at least one of the following: the indication information of the time domain resource of the first channel and pilot information of the first channel. The pilot information of the first channel may be, for example, information about a channel state information reference signal (channel state information reference signal, CSI-RS) and/or information about a demodulation reference signal (demodulation reference signal, DMRS). For details, refer to related descriptions in the foregoing case 1. Optionally, the first information may be carried in the first physical layer control information, and the first physical layer control information may be scrambled by an RNTI. For details, refer to related descriptions in the foregoing case 1. Details are not described herein again. Optionally, the first physical layer control information may include first information of another device in the group to which the terminal device belongs. For details, refer to related descriptions in the foregoing case 1. Details are not described herein again.

The network device may further send the second physical layer control information to the terminal device, where the second physical layer control information may include the signaling information for sending the feedback information by the terminal device. For details, refer to related descriptions in the foregoing case 1. Optionally, the second physical layer control information may further include timing information of the feedback information, information for triggering aperiodic CSI, information for triggering an SRS, and/or the like. The second physical layer control information may be carried in the first channel scheduled by using the first information, or the second physical layer control information may be carried in group-second physical layer control information. For details, refer to related descriptions in the foregoing case 1. In addition, for a resource that is of a resource carrying the second physical layer control information and that is on the first channel scheduled by using the second physical layer control information and a quantity of REs occupied by the second physical layer control information, refer to related descriptions in the foregoing case 1. Details are not described herein again.

In a possible implementation, the network device may further send third physical layer control information to the terminal device. The third physical layer control information may include information for decoding the first channel. For example, the third physical layer control information may include at least one of the following: a HARQ process number, an NDI, a PMI of the first channel, an MCS, a TBS, and the like. For understanding and functions of these parameters, refer to related descriptions in the foregoing case 1. Details are not described herein again. If the third physical layer control information does not include the TBS, the TBS may be indicated by the network device to the terminal device. Alternatively, the TBS may be obtained through processing based on the time-frequency resource of the scheduled first channel. Alternatively, the TBS may be related to the time-frequency resource of the scheduled first channel. An association relationship between the TBS and the time-frequency resource of the scheduled first channel may be specified in a communication protocol. For details, refer to related descriptions in the foregoing case 1.

In an example, the third physical layer control information may be carried in group-third physical layer control information of the group to which the terminal device belongs. Location information of the third physical layer control information of the terminal device in the group-third physical layer control information may be specified in a communication protocol. For example, the terminal device may determine the location information of the third physical layer control information of the terminal device in the group-third physical layer control information based on a predefined formula or calculation manner. For details, refer to the location information of the first information in the first physical layer control information shown in the case 1. Details are not described herein again.

Optionally, the group-third physical layer control information may be scrambled by a G-RNTI. The network device may separately unicast, to each terminal device in the group of devices, the group-third physical layer control information scrambled by the G-RNTI, or may multicast, to the plurality of terminal devices in the group of devices, the group-third physical layer control information scrambled by the G-RNTI.

Based on the foregoing solution, because the third physical layer control information may be carried in the group-third physical layer control information, a probability of collision and blocking of the group-third physical layer control information can be reduced while reducing processing time of the terminal device, and a quantity of times that the terminal device blindly detects the group-third physical layer control information can also be reduced. In addition, the terminal device may separately receive the three pieces of physical layer control information, and process the first channel and a channel that is ready to carry the feedback information, so that the processing latency of the terminal device can be effectively reduced. In this way, the terminal device can perform a plurality of HARQ retransmissions within maximum latency, so that spectral efficiency and a system capacity can be effectively improved, thereby reducing latency and improving reliability.

Based on the foregoing solution, the third physical layer control information of the terminal device is carried in the group-third physical layer control information, so that collision of the physical layer control information can be reduced.

In another example, the third physical layer control information may be physical layer control information dedicated to the terminal device. The third physical layer control information may be carried on the first 1 to T symbols of the first channel. In this way, the third physical layer control information may be obtained through decoding before the first channel is decoded. Optionally, the third physical layer control information may be scrambled by a C-RNTI, or may be scrambled by a G-RNTI.

It should be noted that both a reliability requirement of the third physical layer control information and a reliability requirement of the first information are high. If the first information and the third physical layer control information are not accurately received, the terminal device cannot accurately receive the first channel. In addition, information included in the second physical layer control information is not strongly related to the first channel, and reliability of the second physical layer control information may be lower than that of the first information and the third physical layer control information. Therefore, the third physical layer control information and the second physical layer control information may be independently encoded. A quantity of REs occupied by the third physical layer control information may be determined by using an offset. The offset may be indicated by the network device to the terminal device, or may be specified in a communication protocol. For details, refer to related descriptions in the case 1. Details are not described herein again. Optionally, the offset of the third physical layer control information may be greater than or equal to 1, and may be independent of the offset of the second physical layer control information.

Optionally, the third physical layer control information and the second physical layer control information may alternatively be jointly encoded. This is not specifically limited in this application. If the third physical layer control information and the second physical layer control information are jointly encoded, the quantity of REs occupied by the third physical layer control information and the quantity of REs occupied by the second physical layer control information may be determined by using one offset, where the offset may be greater than or equal to 1.

Based on the foregoing solution, the third physical layer control information may be physical layer control information dedicated to the terminal device, and may be in the time-frequency resource of the first channel. Therefore, the terminal device does not need to blindly detect the third physical layer control information, so that a quantity of blind detections can be reduced, thereby reducing the processing latency of the terminal device.

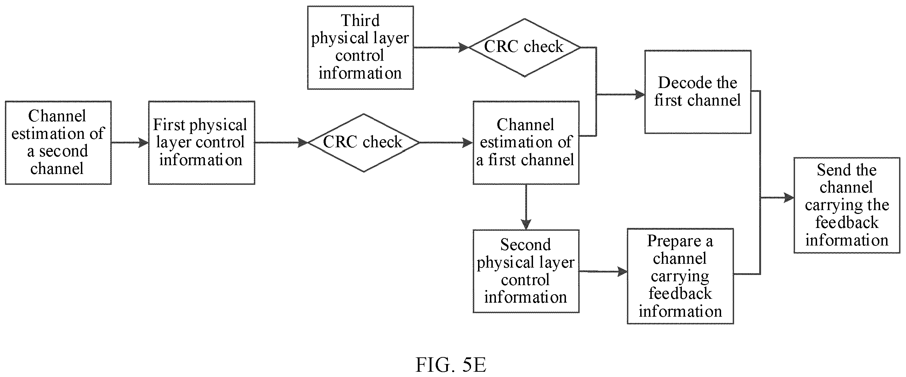

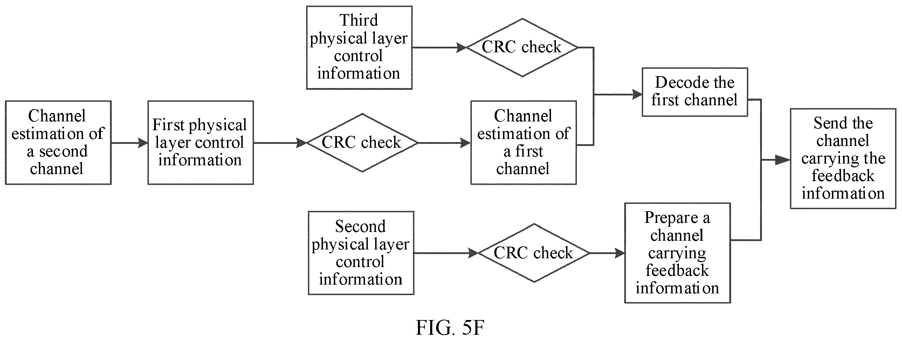

The following describes the foregoing case 3 by using FIG. 5E and FIG. 5F. For example, refer to FIG. 5E. The terminal device may perform blind detection on the second channel to obtain the first physical layer control information, and optionally, may obtain the first information after successfully performing CRC code check on the first physical layer control information. In addition, the terminal device may receive the third physical layer control information, and optionally perform CRC code check on the third physical layer control information. The terminal device may determine the time-frequency resource of the scheduled first channel based on the first information, to receive the first channel based on the time-frequency resource of the first channel. When preparing, based on the second physical layer control information carried on the first 1 to T time domain symbols of the first channel, the channel carrying the feedback information, the terminal device may perform channel estimation on the first channel, and decode the first channel based on the third physical layer control information. For example, the terminal device may perform channel estimation on the first channel based on a DMRS of the second channel or a DMRS on a DMRS symbol. In addition, the terminal device may decode the first channel based on the information such as the HARQ process number, the NDI, the PMI, and the MCS, and the terminal device may prepare, based on at least one of the power control information and the format information that are of the channel carrying the feedback information and that are in the second physical layer control information, the channel that carries the feedback information. In this way, after decoding the first channel, the terminal device may send the channel carrying the feedback information.

For example, refer to FIG. 5F. The terminal device may perform blind detection on the second channel to obtain the first physical layer control information, and optionally, may obtain the first information after successfully performing CRC code check on the first physical layer control information. In addition, the terminal device may receive the third physical layer control information, and optionally perform CRC code check on the third physical layer control information. The terminal device may further blindly detect the group-second physical layer control information, and obtain the second physical layer control information of the terminal device that is carried in the group-second physical layer control information. For example, the terminal device may perform channel estimation on the first channel based on a DMRS of the second channel or a DMRS on a DMRS symbol. In addition, the terminal device may decode the first channel based on the information such as the HARQ process number, the NDI, the PMI, and the MCS, and the terminal device may prepare, based on at least one of the power control information, the resource information, and the format information in the second physical layer control information, the channel that carries the feedback information. In this way, after decoding the first channel, the terminal device may send the channel carrying the feedback information.

It can be learned from FIG. 5E and FIG. 5F that, the terminal device may perform, by using the first information, the second physical layer control information, and the third physical layer control information, in parallel processing operations of estimating and decoding the first channel and preparing the channel that carries the feedback information. Therefore, the processing latency of the terminal device can be effectively reduced.

Optionally, the channel estimation of the first channel may include channel estimation of a reference signal (for example, a DMRS) and channel estimation of a resource element in which the data is located. The channel estimation of the resource element in which the data is located may be separately performed on each symbol. In this case, the channel estimation of the resource element in which the data is located and the decoding of the first channel may be performed in parallel or in serial. This is not limited in this application. In FIG. 5A to FIG. 5F, an example in which parallel processing is performed is used for description. When the second control information is transmitted on the first channel, the second control information may include a CRC code, and the terminal device needs to perform CRC check; or the second control information may not include a CRC code, and in this case, the terminal device may not perform CRC code check. In FIG. 5A to FIG. 5F, an example in which CRC code check is not performed is used for description. The second control information and data information of the first channel may be jointly encoded, or may be separately encoded.

Based on the foregoing case 1 to case 3, the terminal device can concurrently perform operations of processing the first channel and preparing the channel that carries the feedback information, so that the processing latency of the terminal device can be reduced.

In a possible implementation, the terminal device may perform channel estimation on the first channel and the second channel. In an example, the terminal device may perform channel estimation on the second channel based on the DMRS of the second channel. Optionally, the time-frequency resource of the second channel may be M CCEs, where M is greater than or equal to 1. The terminal device may perform channel estimation on the second channel based on DMRSs of the M CCEs. Optionally, the second channel includes the first physical layer control information, and the first physical layer control information may include first information of a plurality of terminal devices. Therefore, a large quantity of frequency domain resources need to be occupied, that is, a CCE set level is high. Therefore, the DMRS of the second channel may be a wideband DMRS, and M may be greater than or equal to 2. The terminal device may estimate the second channel based on the wideband DMRS, and then blindly detect the first physical layer control information based on each CCE set level.

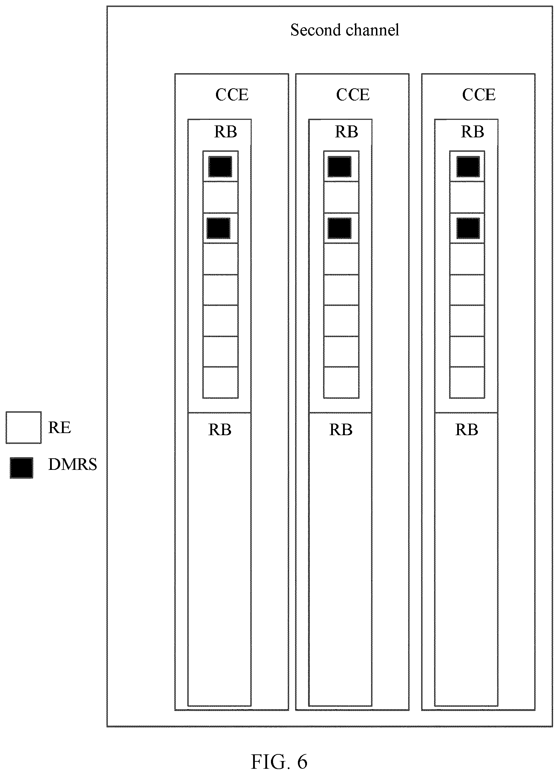

Refer to FIG. 6. The time-frequency resource of the second channel may be three CCEs, each CCE may include x₁ resource blocks (resource block, RB), and each RB may include x₂ REs. In x₂ REs of one RB, there may be x₃ REs on which DMRSs are located. In this case, one CCE may include x₁×x₃ DMRSs. The second channel may have 3×x₁×x₃ DMRSs. When performing channel estimation on the second channel, the terminal device may perform channel estimation on the second channel by using the 3×x₁×x₃ DMRSs. The terminal device may blindly detect the first physical layer control information based on a channel estimation result. It should be understood that a quantity of CCEs, a quantity of RBs, a quantity of REs, and a quantity of DMRSs shown in FIG. 6 are examples, and do not constitute a limitation on this application.

Based on the foregoing solution, the terminal device may perform channel estimation on the second channel based on the DMRS of the second channel, and does not need to perform channel estimation based on each CCE. This can reduce the processing latency of the terminal device.

Optionally, if the DMRS of the second channel is wideband, the DMRS of the second channel may be reused to perform channel estimation on the first channel. The terminal device may perform channel estimation on the first channel based on the DMRS of the second channel. The terminal device may decode the first channel and perform channel equalization on the first channel based on the channel estimation result of the second channel.

Therefore, if some low frequency bands are suitable for only a wide beam or when there is a high latency requirement, the DMRS of the second channel may be reused to perform channel estimation on the first channel. Based on the foregoing solution, an operation of performing channel estimation by the terminal device based on the DMRS of the first channel is omitted, and the processing time of the terminal device can be reduced. In addition, in the time-frequency resource of the first channel, a DMRS occupies a few REs, or even 0 REs. Therefore, DMRS overheads can be reduced, and a large quantity of time-frequency resources can be used for the first channel, thereby improving reliability of the first channel.

Optionally, a subcarrier spacing of the second channel may be greater than a subcarrier spacing of the first channel. In this case, a symbol length of the second channel is shorter than a symbol length of the first channel. This can also reduce latency, and can reduce overheads of the second channel. In addition, bandwidth of the second channel is larger, and DMRS bandwidth of the second channel is also larger Therefore, the DMRS of the second channel is more suitable for channel estimation on the first channel. In addition, occupation duration of the second channel is also shortened, that is, time occupied in end-to-end latency of a transport block (transport block, TB) is shorter, so that a HARQ round trip time (round transmission time, RTT) is shorter, thereby helping increase a quantity of HARQ transmissions within maximum end-to-end latency, and improving data reliability.

In a possible implementation, a channel estimation manner of the first channel may be indicated by the network device, may be indicated by using the first information, or may be specified in a communication protocol. The channel estimation manner of the first channel may be performing channel estimation on the first channel by using the DMRS of the first channel, or the channel estimation manner of the first channel may be performing channel estimation on the first channel by reusing the DMRS of the second channel.

In another example, the terminal device may perform channel estimation on the first channel and the second channel based on the DMRS symbol corresponding to the first channel. The DMRS symbol may carry a DMRS, and the DMRS on the DMRS symbol may be common to the first channel and the second channel, or may belong to neither the second channel nor the first channel. Optionally, the DMRS symbol may precede the first channel in time domain. Alternatively, the DMRS symbol and the first signal may be in a same time domain but in different frequency domains. Based on the DMRS on the DMRS symbol, the terminal device may perform channel estimation and channel equalization on the first channel and the second channel.

Optionally, a subcarrier spacing of the DMRS symbol may be greater than the subcarrier spacing of the second channel. Alternatively, a subcarrier spacing of the DMRS symbol may be greater than the subcarrier spacing of the first channel. In this case, a symbol length of the DMRS symbol may be shorter than the symbol length of the first channel, so that latency can also be reduced. In addition, bandwidth of the DRMS on the DMRS symbol is larger, and therefore the DMRS symbol is more suitable for channel estimation on the first channel and the second channel.

Based on the foregoing solution, according to the physical layer control information transmission method provided in this embodiment of this application, the processing latency of the terminal device can be reduced, and the HARQ round trip time (round transmission time, RTT) can be reduced, so that the quantity of HARQ transmissions within the maximum end-to-end latency can be increased, and data reliability can be improved.

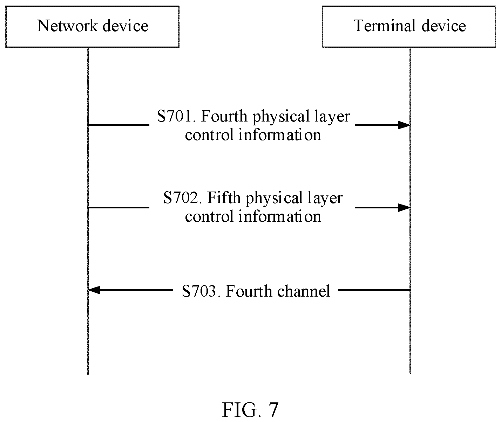

An embodiment of this application further provides another physical layer control information transmission method. FIG. 7 is an example flowchart of the method. The method may include the following operations.

S701. A network device sends fourth physical layer control information to a terminal device.

The fourth physical layer control information may include second information of the terminal device. The second information may include physical layer control information for calculating a size of a transport block. The network device may send the fourth physical layer control information to the terminal device on a third channel. The third channel may be for transmitting physical layer control information, and may be, for example, a PDCCH. The third channel may be the same as a second channel, or may be different from the second channel. The terminal device may receive physical layer control information of an uplink grant (UL grant) on the third channel. It should be understood that the uplink grant is a name in LTE and NR. In a future communication system such as 6G, a new term may be used, or the uplink grant may still be used.

The second information may include at least one of the following:
1. NDI

If the NDI is flipped relative to a same HARQ process number, it may indicate that data is new data. For example, if the NDI in the second information has a value different from that of NDI in previous dynamically-scheduled second information, it indicates that the data is initially transmitted data. If the NDI in the second information has a value the same as that of the NDI in the previous dynamically-scheduled second information, it indicates that the data is retransmitted data.

Alternatively, if NDI=1, it may indicate that the data is new data; or if NDI=0, it may indicate that the data is retransmitted data; and vice versa.

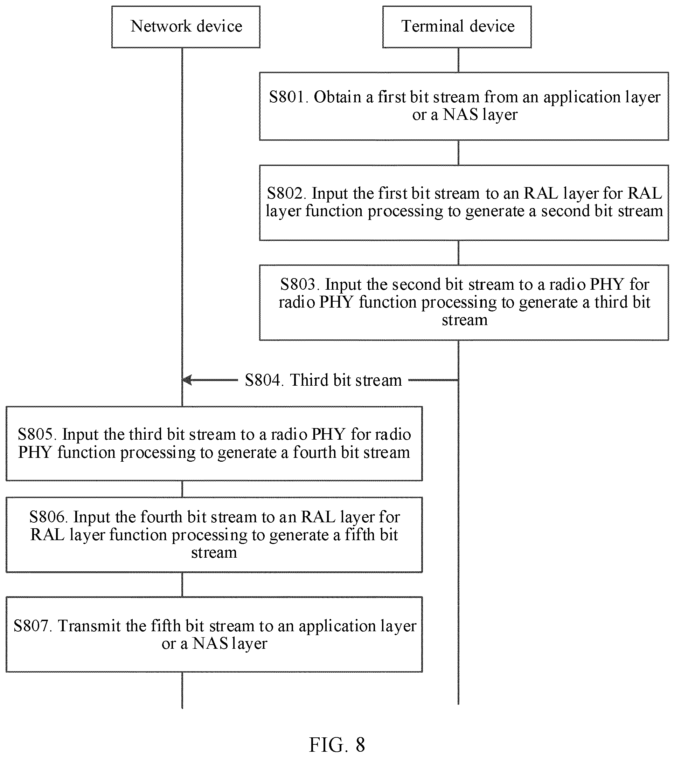

Optionally, if the NDI indicates new data, the second information may further include TBS indication information of a new data packet. It should be understood that, in the third channel, the TBS indication information may be a TBS index, and the TBS index is associated with a TBS. An association relationship between the TBS index and the TBS may be indicated by the network device, or may be specified in a communication protocol. Alternatively, the TBS indication information may be indication information of a time-frequency resource of a scheduled fourth channel and an MCS. The terminal device may obtain the TBS through calculation or table lookup based on the time-frequency resource of the fourth channel and the MCS. An association relationship between the time-frequency resource of the fourth channel and the TBS and between the MCS and the TBS may be indicated by the network device, or may be specified in a communication protocol. The terminal device learns of the TBS, and may start corresponding packet processing at layer 2 (L2). L2 may be a radio access layer (radio access layer, RAL) layer. It should be noted that the RAL layer is described in the following method embodiment shown in FIG. 8.

### 2. HARQ process number

If the NDI indicates retransmitted data, the second information may include a HARQ process number. Optionally, the HARQ process number may not be included, and the HARQ process number of the retransmitted data may be associated with an index of a symbol on which the second information is located or a frequency domain resource on which the second information is located. It should be understood that an association relationship between the HARQ process number and the index of the symbol on which the second information is located or the frequency domain resource may be indicated by the network device, or may be specified in a communication protocol.

### 3. Redundancy version (redundancy version, RV) number

If the NDI indicates retransmitted data, the second information may further include an RV number. The terminal device may prepare a to-be-sent data bit stream based on a HARQ process number and the RV number. Optionally, the RV number may also be predetermined in a communication protocol. For example, the RV number may be determined according to a sequence of RVs (0, 2, 3, 1). Alternatively, the network device may notify the terminal device of a used RV sequence in advance. For example, the sequence may be (0, 3, 0, 3), (0, 0, 0, 0) or (0, 2, 3, 1). In this way, the second information may not include the RV number, so that overheads of control signaling can be further reduced.

### 4. Quantity of multiple input multiple output (multiple input multiple output, MIMO) layers

The quantity of MIMO layers may be understood as a quantity of data streams simultaneously transmitted in space. The quantity of MIMO layers does not exceed a quantity of transport streams supported by a system. Optionally, the second information may not include the quantity of MIMO layers, which may be specified in a communication protocol. For example, as specified, the quantity of MIMO layers may be 1.

Optionally, the fourth physical layer control information may include second information of another device in a group to which the terminal device belongs. The network device may include second information of a plurality of terminal devices in a group of devices in the fourth physical layer control information, and send the fourth physical layer control information to the group of devices. Optionally, the fourth physical layer control information may be scrambled by a G-RNTI of the group of devices. The terminal devices in the group of devices may blindly detect the fourth physical layer control information based on the G-RNTI, to obtain the second information of the terminal devices.

In an example, if the fourth physical layer control information includes second information of a plurality of terminal devices, location information of second information of a terminal device in the fourth physical layer control information may be specified in a communication protocol. For example, the fourth physical layer control information includes a plurality of information blocks, and one of the information blocks carries the second information of the terminal device. When receiving the second information, the terminal device needs to know location information, in the fourth physical layer control information, of an information block that carries the second information of the terminal device, where the location information is, for example, an index of the information block. For example, the terminal device may determine, based on a predefined formula or calculation manner, the location information of the second information of the terminal device in the fourth physical layer control information. For example, the terminal device may obtain, based on a C-RNTI of the terminal device and the foregoing predefined formula or calculation manner, an index of an information block carrying the second information. For example, an information block index (block index) is equal to a remainder of C-RNTI/B, where B may represent a total quantity of information blocks of the fourth physical layer control information, and B is greater than 0. Alternatively, the terminal device may determine, based on time-frequency information that carries the fourth physical layer control information, the index of the information block that carries the second information. The time-frequency information may be an index of a slot, an index of a time domain symbol, an index of a carrier, or the like.

It should be understood that the foregoing formula or calculation manner and parameters are all examples, and do not constitute a limitation on a method for determining, by the terminal device, the location information of the second information in the fourth physical layer control information. In this embodiment of this application, another method and parameter may be alternatively for determining the location information of the second information of the terminal device in the fourth physical layer control information.

In another example, if the fourth physical layer control information includes second information of a plurality of terminal devices, location information of second information of a terminal device in the fourth physical layer control information may be indicated by the network device to the terminal device. For example, the network device may indicate, to the terminal device by using RRC signaling, the location information of the second information of the terminal device in the fourth physical layer control information. For example, the location information of the second information in the fourth physical layer control information may be indicated to the terminal device by using RRC configuration (configuration) signaling.

Optionally, the fourth physical layer control information may be scrambled by a G-RNTI. For example, the network device may allocate one G-RNTI to a plurality of terminal devices. The plurality of terminal devices may be considered as a group of devices. The network device may send, to a terminal device in the group of devices, the fourth physical layer control information scrambled by the G-RNTI. The terminal device may blindly detect the fourth physical layer control information based on the G-RNTI, to obtain the second information. The network device may separately unicast, to each terminal device in the group of devices, the fourth physical layer control information scrambled by the G-RNTI, or may multicast, to the plurality of terminal devices in the group of devices, the fourth physical layer control information scrambled by the G-RNTI.

It should be noted that a larger search space of the third channel that carries the fourth physical layer control information indicates a lower probability of collision and blocking of the fourth physical layer control information, and therefore indicates higher data transmission reliability. However, a larger search space of the third channel carrying the fourth physical layer control information indicates a larger quantity of times of blind detection performed by the terminal device on the fourth physical layer control information. This leads to larger processing latency of the terminal device and a smaller quantity of HARQ transmissions that can be supported within a maximum latency. However, there is a low probability that data on which HARQ retransmission needs to be performed for a plurality of times is correctly transmitted within the maximum latency.

However, in the foregoing method, the fourth physical layer control information may include the second information of the plurality of terminal devices. For example, one service area or a cellular cell includes 50 terminal devices, and 10 terminal devices are in a group. Even if all the 50 terminal devices are scheduled, there is only five pieces of fourth physical layer control information. In this case, a probability that the fourth physical layer control information collides is very low. Therefore, a search space for each piece of fourth physical layer control information may be small. Assuming that one piece of fourth physical layer control information corresponds to only one search location, a quantity of blind detections corresponding to the fourth physical layer control information may be 0. This can reduce processing time of the terminal device. Usually, a quantity of blind detections corresponding to one piece of fourth physical layer control information may be 0 to 4. In this way, a probability of collision and blocking of the fourth physical layer control information can be reduced while reducing processing time of the terminal device, and a quantity of times that the terminal device blindly detects the fourth physical layer control information can also be reduced.

Optionally, the fourth physical layer control information may include one CRC code. A plurality of terminal devices in a group of devices may check the fourth physical layer control information by using a same CRC code, and obtain second information of the plurality of terminal devices from the fourth physical layer control information. Based on the foregoing solution, system overheads of physical layer control information can be effectively reduced. A size of a payload (payload) of the fourth physical layer control information may be specified in a communication protocol, or may be configured by the network device by using RRC signaling.

S702. The network device sends fifth physical layer control information to the terminal device.

The network device may send the fifth physical layer control information to the terminal device on the third channel. The fifth information may include at least one of the following: DMRS-related information on the fourth channel, a PMI on the fourth channel, SRS request information, BWP indication information, an antenna port, SRS resource indication information, power of the fourth channel, CSI triggering information, CBG transmission information, and information about an association between a PTRS and a DMRS.

Based on the foregoing solution, the terminal device may demodulate and read the fifth physical layer control information when processing an L2 packet based on the second information. Therefore, the terminal device may prepare, based on the fifth physical layer control information, the fourth channel carrying data and some Layer 1 (L 1) processing, so that preparation time for the terminal device to send a data channel can be effectively reduced.

In an example, the fifth physical layer control information may be carried in group-fifth physical layer control information of the group to which the terminal device belongs. Location information of the fifth physical layer control information of the terminal device in the group-fifth physical layer control information may be specified in a communication protocol. For example, the terminal device may determine the location information of the fifth physical layer control information of the terminal device in the group-fifth physical layer control information based on a predefined formula or calculation manner. For details, refer to related descriptions of the location information of the second information in the fourth physical layer control information. Details are not described herein again.

Optionally, the group-fifth physical layer control information may be scrambled by a G-RNTI. The network device may separately unicast, to each terminal device in the group of devices, the group-fifth physical layer control information scrambled by the G-RNTI, or may multicast, to the plurality of terminal devices in the group of devices, the group-fifth physical layer control information scrambled by the G-RNTI.

Based on the foregoing solution, because the fifth physical layer control information may be carried in the group-fifth physical layer control information, a probability of collision and blocking of the group-fifth physical layer control information can be reduced while reducing preparing time of sending data by the terminal device, and a quantity of times that the terminal device blindly detects the group-fifth physical layer control information can also be reduced.

S703. The terminal device sends the fourth channel.

The terminal device may prepare the fourth channel based on the fifth physical layer control information, and send the fourth channel to the network device. Optionally, the fourth channel may include data of the terminal device.

Based on the foregoing method, the terminal device may separately receive two pieces of physical layer control information, process an L2 packet, and prepare a data channel, so that the processing latency of the terminal device can be effectively reduced. In this way, the terminal device can perform a plurality of HARQ retransmissions within maximum latency, so that spectral efficiency and a system capacity can be effectively improved, thereby reducing latency and improving reliability.

The following explains and describes a data transmission method provided in embodiments of this application. The method may be applied to communication services such as eMBB, mMTC, and URLLC. FIG. 8 is a flowchart of the method. In the following description process, an example in which the method is applied to the network architecture shown in FIG. 3 is used. In addition, the method may be performed by two communication apparatuses, and the two communication apparatuses are, for example, a first communication apparatus and a second communication apparatus. For ease of description, an example in which the method is performed by the network device and the terminal device is used below. In other words, an example in which the first communication apparatus is a terminal device and the second communication apparatus is a network device is used. It should be noted that this embodiment of this application is merely performed by using the network device and the terminal device as an example, and is not limited to this scenario.

FIG. 8 is an example flowchart of the data transmission method according to an embodiment of this application. The method may include the following operations.

S801. The terminal device obtains a first bit stream from an application layer or a non-access stratum (non-access stratum, NAS).

S802. The terminal device inputs the first bit stream to a radio access layer (radio access layer, RAL) layer for RAL layer function processing to generate a second bit stream.

The RAL layer may include a data transfer (data transfer) function. It should be understood that the RAL layer may also be referred to as a RAN-high layer, or may have any other name. This is not specifically limited in this application. For ease of description, the RAL layer is named in the following description process.

Optionally, the second bit stream may include an RAL header and the first bit stream. The RAL header may precede the first bit stream. The RAL header may include third information. The third information may indicate whether the first bit stream is a data bearer or a signaling bearer. Alternatively, the third information may indicate at least two logical channel identities. The logical channel identity may be understood as a channel number. In the at least two logical channel identities, a first logical channel identity corresponds to a data bearer, and a second logical channel identity corresponds to a signaling bearer. For example, two logical channels may be a logical channel 0 and a logical channel 1. The logical channel 0 is a signaling bearer, and the logical channel 1 is a data bearer. Alternatively, the third information may indicate that the first bit stream is from the application layer or the NAS layer. The second bit stream may further include a message authentication code for integrity (message authentication code for integrity, MAC-I) part. The MAC-I part may be appended to the first bit stream.

A message authentication code for integrity function enables a receiving entity (including a terminal device and a network device) to detect whether an RRC signaling message and user plane data are tampered with. Specifically, both a sending party and a receiving party negotiate based on an RRC message to use an integrity algorithm. The sending party calculates a MAC-I of the message based on an input parameter and the negotiated integrity algorithm, and then sends the MAC-I of the message and the message together to the receiving party. The input parameter may include a key (KEY), a bearer (BEARER), a direction (DIRECTION), a count (COUNT), a message (MESSAGE), a length (LENGTH), and the like. This is not specifically limited in this application. The receiver uses the negotiated message authentication code for integrity algorithm to calculate an X-MAC of the message and compares the X-MAC with the MAC-I of the message. If the X-MAC and the MAC-I are different, the receiver determines that the message has been tampered with. If the X-MAC and the MAC-I are the same, the receiver determines that integrity verification on the message succeeds. It should be understood that the integrity algorithm is not specifically limited in this application.

Optionally, for the terminal device, the second bit stream may further include a control element (control element), such as a buffer status report, a beam failure report, a power headroom report, a configuration resource acknowledgment, a cell-radio network temporary identifier, and a padding bit. An identifier of the control element may also be represented by a logical channel identity or a local character set identifier (local character set identifier, LCID). Optionally, the LCID corresponding to the control element may be jointly encoded together with logical channel identities of the data bearer and a common control channel bearer. For example, Table 1 and Table 2 are separately used for description.

**Table 1 Possible logical channel identities included in the RAL header in the second bit stream**

| Codepoint (Codepoint)/Index (Index) | LCID values (values) |
|---|---|
| 0 | Common control channel (common control channel, CCCH) |
| 1 and 2 | Identity of a data logical channel (identity of the logical channel) |
| 3 | Buffer status report (buffer status report, BSR) |
| 4 | Beam failure report (beam failure report) |
| 5 | Power headroom report (power headroom report, PHR) |
| 6 | C-RNTI |
| 7 | Padding (Padding) |

**Table 2 Possible logical channel identities included in the RAL header in the second bit stream**

| Codepoint (Codepoint)/Index (Index) | LCID values (values) |
|---|---|
| 0 | Common control channel (common control channel, CCCH) |
| 1 | Identity of a data logical channel (Identity of the logical channel) |
| 2 | Buffer status report (buffer status report, BSR) |
| 3 | Beam failure report (Beam Failure Report) |

Optionally, for the network device, the second bit stream may further include a control element (control element), for example, may include replication activation or replication deactivation, secondary cell activation or secondary cell deactivation, a discontinuous reception command, a timing advance command, a UE contention resolution identity, a padding bit, and the like. An identifier of the control element may be represented by a logical channel identity or an LCID. Optionally, the LCID corresponding to the control element may be jointly encoded together with logical channel identities of the data bearer and a common control channel bearer. For example, Table 3 and Table 4 are separately used for description.

**Table 3 Possible logical channel identities included in the RAL header in the second bit stream**

| Codepoint (Codepoint)/Index (Index) | LCID values (values) |
|---|---|
| 0 | Common control channel (common control channel, CCCH) |
| 1 and 2 | Identity of a data logical channel (identity of the logical channel) |
| 3 | Duplication activation/deactivation (Duplication Activation/Deactivation) |
| 4 | Secondary cell activation/deactivation (SCell Activation/Deactivation) |
| 5 | Long discontinuous reception (discontinuous reception, DRX) command |
| 6 | Timing advance command (Timing Advance Command) |
| 7 | UE contention resolution identity (UE Contention Resolution Identity) |

**Table 4 Possible logical channel identities included in the RAL header in the second bit stream**

| Codepoint (Codepoint)/Index (Index) | LCID values (values) |
|---|---|
| 0 | Common control channel (common control channel, CCCH) |
| 1 | Identity of a data logical channel (identity of the logical channel) |
| 2 | Timing advance command (Timing Advance Command) |
| 3 | Duplication activation/deactivation (Duplication Activation/Deactivation) |

It should be noted that Table 1 to Table 4 do not constitute a limitation on the logical channel identity in this embodiment of this application, and the logical channel identity in this embodiment of this application may alternatively be in another combination. Optionally, there may be one or more data bearer logical channel identities.

Optionally, the second bit stream may further include a control element and an RAL header corresponding to the control element. The control element may have a separate RAL header For example, the RAL header of the control element may be added before the control element. The RAL header of the control element may include sixth information. The sixth information may indicate a logical channel identity of the control element.

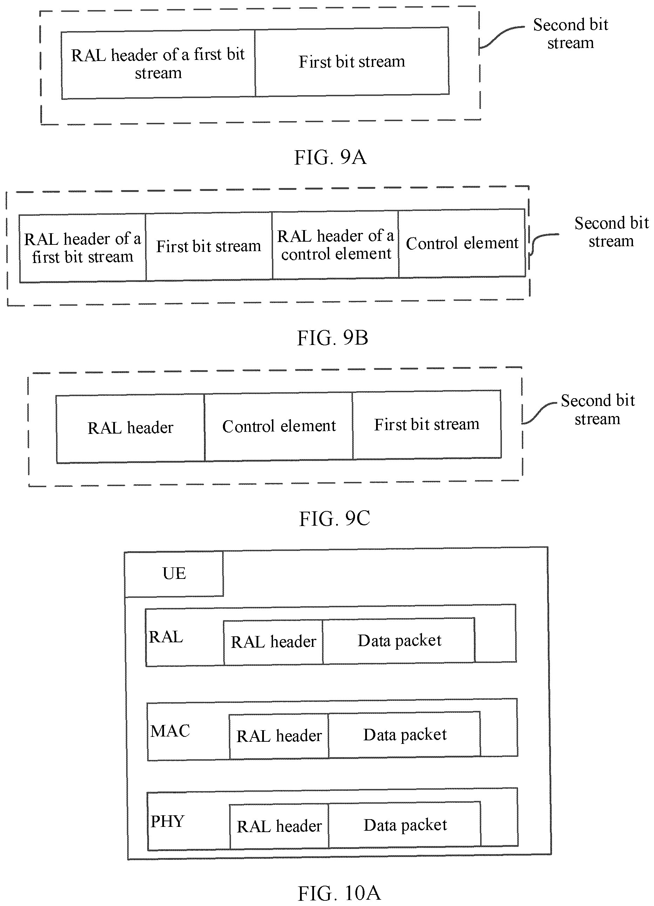

The following describes the second bit stream in this embodiment of this application by using FIG. 9A to FIG. 9C.

Refer to FIG. 9A. The second bit stream may include the first bit stream and an RAL header corresponding to the first bit stream. The RAL header corresponding to the first bit stream may precede the first bit stream. Optionally, the message authentication code for integrity part may be the last part of the second bit stream. For example, the message authentication code for integrity part may follow (not shown in the figure) the first bit stream shown in FIG. 9A.

Refer to FIG. 9B. The second bit stream may include the first bit stream, the RAL header corresponding to the first bit stream, a control element, and an RAL header corresponding to the control element. The RAL header corresponding to the first bit stream may precede the first bit stream, and the RAL header corresponding to the control element may precede the control element. It should be noted that a location relationship between the first bit stream and the control element is not specifically limited in this application. The first bit stream may precede the control element, or may follow the control element. FIG. 9B is described by using an example in which the first bit stream precedes the control element. Optionally, the second bit stream may further include another control element and a corresponding RAL header (not shown in the figure). Optionally, the message authentication code for integrity part may be the last part of the second bit stream. For example, the message authentication code for integrity part may follow (not shown in the figure) the control element shown in FIG. 9B.

Refer to FIG. 9C. The second bit stream may include an RAL header, the first bit stream, and a control element. The RAL header includes an RAL header corresponding to the control element and an RAL header corresponding to the first bit stream. For example, third information may be included, and a quantity of control elements may be indicated, or a type (LCID) of the control element may be included. The RAL header may precede the first bit stream and the control element. A location relationship between the first bit stream and the control element is not specifically limited in this application. In FIG. 9C, an example in which the control element precedes the first bit stream is used for description. Optionally, the message authentication code for integrity part may be the last part of the second bit stream. For example, the message authentication code for integrity part may follow (not shown in the figure) the first bit stream shown in FIG. 9C.

Optionally, the quantity of control elements included in the second bit stream and the type (LCID) of the control element included in the second bit stream depend on triggering of a corresponding event. For example, if the network device finds that sending timing of the user terminal device is inaccurate, the network device triggers a control element carrying a timing advance command, and the network device adds the control element, namely, the timing advance command, and a corresponding RAL header to the RAL layer. For another example, if the terminal device finds that there is data in a buffer, the terminal device adds a control element, namely, a BSR, and a corresponding RAL header to the RAL layer. For another example, if it is found that data is insufficient to be sent, the network device or the terminal device may add a control element, namely, padding.

Optionally, the RAL layer may further include another function. For example, the RAL layer may further include at least one of the following functions: entity establishment, entity release, HARQ, radio bearer release, radio bearer establishment, exception handling, event triggering, paging channel message reception, broadcast channel reception, RAL duplication, Ethernet header compression, timing advance, random access, or data volume calculation. The radio bearer establishment may include data radio bearer establishment and signaling radio bearer establishment, and the radio bearer release may include data radio bearer release and signaling radio bearer release.

The functions of the RAL layer and a trigger condition of each function may be in Table 5.

**Table 5**

| Name of an RAL function | Trigger condition/Function |
|---|---|
| 1. Entity establishment (entity establishment) | RRC configuration: gNB→UE |
| 2. Entity release (entity release) | RRC configuration: gNB→UE |
| 3. Unacknowledged mode (unacknowledged mode, UM) data transfer (UM data transfer) | There is UM data sending |
| 4. UM data reception (UM data reception) | There is UM data reception |
| 5. Transparent mode (transparent mode, TM) data transfer (TM data transfer) | There is TM data sending (based on RRC Setup Req) |
| 6. TM data reception (TM data reception) | There is TM data reception (basic functions (paging paging or a synchronization signal block reception, and SIB reception)) |
| 7. DRB release (DRB release) | RRC configuration: gNB→UE |
| 8. Data volume calculation (Data volume calculation) | Event triggering (BSR reporting) |
| 9. Random access channel RACH | (Initial UE access) |
| 10. Timing advance TA | (UE uplink timing synchronization) |
| 11. HARQ | (UE data reception/sending) |
| 12. Paging channel (paging indicator channel, PCH) reception (reception) | (Paging channel message reception) |
| 13. Broadcast channel (broadcast channel, BCH) reception (reception) | (Broadcast channel reception) |
| 14. Duplication (duplication) | On-demand triggering, for example, triggering based on remaining latency and a reliability requirement of data |
| 15. Ethernet header compression | On-demand triggering, for example, triggering in a case of a small data packet; or this function is always enabled for a data bearer of a specific type of terminal |

S803. The terminal device inputs the second bit stream to a radio PHY for radio PHY function processing to generate a third bit stream.

The radio PHY function processing includes at least channel coding. Optionally, the radio PHY may perform channel coding on the second bit stream to generate the third bit stream.

S804. The terminal device sends the third bit stream to the network device. Correspondingly, the network device receives the third bit stream sent by the terminal device.

S805. The network device inputs the third bit stream to a radio PHY for radio PHY function processing to generate a fourth bit stream.

The radio PHY function processing may include at least channel decoding. Optionally, the radio PHY may perform channel decoding on the third bit stream to generate the fourth bit stream. The fourth bit stream may include a fifth bit stream and an RAL header. The RAL header may precede the fifth bit stream.

Optionally, the fourth bit stream may include a MAC-I part. The MAC-I part may be located in the first 1 to K bytes of the fourth bit stream. K is greater than or equal to 1.

S806. The network device inputs the fourth bit stream to an RAL layer for RAL layer function processing to generate the fifth bit stream.

Functions of the RAL layer may include functions in Table 1.

S807. The network device transmits the fifth bit stream to an application layer or a NAS layer

In this embodiment of this application, the RAL layer is introduced, and there is no service data adaptation protocol SDAP layer, PDCP layer, or RLC layer. Therefore, original SDAP functions such as quality of service (quality of service, QoS) flow (flow) mapping and data radio bearer (data radio bearer, DRB) mapping, PDCP functions such as encryption and decryption, header compression, message authentication code for integrity, duplication (duplication), in-order delivery (in-order delivery), and out-order delivery (out-order delivery), and RLC functions such as RLC unacknowledged mode (unacknowledged mode, UM) and RLC acknowledged mode (acknowledged mode, AM) may not need to be supported.

Optionally, if some functions, for example, duplication (duplication), still need to be supported, the functions may be migrated from the SDAP layer, the PDCP layer, and the RLC layer to a MAC layer or the RAL layer for implementation. Although there is still the MAC layer, functions of the MAC layer may be simplified. For example, functions that are not closely related to a URLLC service may be deleted, such as a bandwidth part (band width part, BWP) operation, beam failure recovery (beam failure recovery, BFR), supplementary uplink (supplementary uplink, SUL), and discontinuous reception (discontinuous reception, DRS).

Optionally, the MAC layer may not support segmentation and multiplexing for some services or DRBs. Segmentation may be understood as dividing an APP packet into two small packets and performing transmission twice. If failure probabilities of both transmissions are the same, the segmentation may cause a reception success rate of the APP packet to be lower than that of one-time transmission without segmentation. Multiplexing may be understood as that a plurality of APP packets are reassembled into one data unit for sending. If the data unit fails to be transmitted, the plurality of consecutive APP packets fail to be transmitted. Services or DRBs for which the MAC layer does not support segmentation and multiplexing may be specified in a communication protocol. For example, as specified in the protocol, the MAC layer may not support segmentation and multiplexing for a URLLC service.

Based on the foregoing solution, because the SDAP layer, the PDCP layer, the RLC layer, and the MAC layer do not exist, operation and processing time of the terminal device can be reduced, and data sending latency can be reduced.

Refer to FIG. 10A. A terminal device may obtain a first bit stream from a NAS layer or an application layer. The first bit stream is transmitted to an RAL layer, and an RAL header is added before the first bit stream, to generate a second bit stream. The terminal device may transmit the second bit stream to a radio PHY layer, and perform channel coding on the second bit stream. The terminal device may send a channel-coded second bit stream to a network device. The network device may transmit the second bit stream to a radio PHY layer, and perform channel decoding on a channel-coded second bit stream, to obtain the second bit stream. The network device may transmit the second bit stream to an RAL layer, obtain the first bit stream from the second bit stream, and send the first bit stream to an application layer or a NAS layer. It should be noted that in the embodiment shown in FIG. 10A, the RAL layer and the radio PHY layer may further have other functions. FIG. 10A is merely an example for description, and does not constitute a limitation on this application. Optionally, in FIG. 10A, the MAC layer may not exist, the RAL layer may not exist, or the RAL layer and the MAC layer are integrated as one layer (for example, a non-PHY layer).

It should be noted that in FIG. 8 and FIG. 10A, an example in which the terminal device sends a data packet to the network device is used for description. The data transmission method in embodiments of this application may also be applicable to a scenario in which a network device sends a data packet to a terminal device.

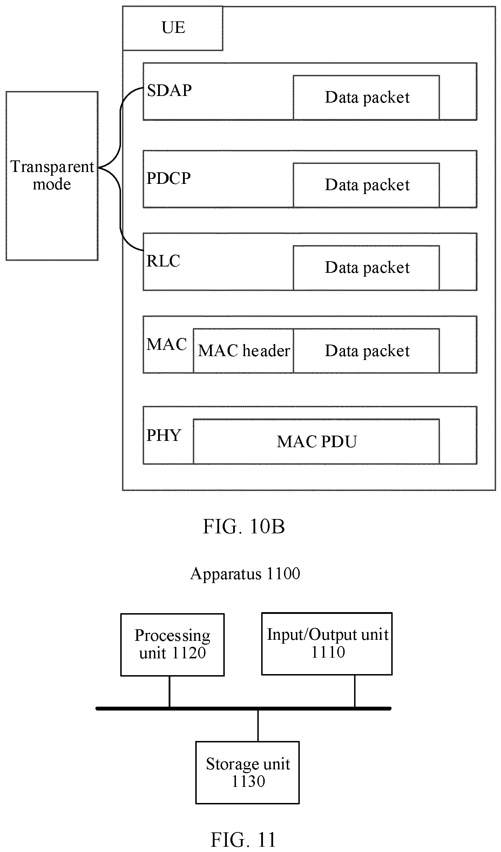

The following describes another data transmission method with reference to FIG. 10B. Refer to FIG. 10B. A user plane protocol stack may further include an SDAP layer, a PDCP layer, and an RLC layer. However, the SDAP layer, the PDCP layer, and the RLC layer may support a transparent mode. For an APP packet of a URLLC service, the SDAP layer, the PDCP layer, and the RLC layer may transparently transmit the APP packet. When the APP packet passes through the SDAP layer, the PDCP layer, and the RLC layer, a header (header) of each layer is not additionally added, so that air interface overheads can be reduced.

In the data transmission method shown in FIG. 10B, a function of a MAC layer is also different from a function of a MAC layer in a user plane protocol stack in LTE and NR systems. For ease of differentiation, the MAC layer provided in this embodiment of this application is referred to as a new MAC layer below.

In a possible implementation, the new MAC layer may include the following functions: entity establishment (entity establishment), entity release (entity release), and data transfer (Data transfer). Optionally, the functions of the new MAC layer may be the same as the functions of the RAL layer. For details, refer to Table 5.

Optionally, the terminal device may generate, by using the method embodiment shown in FIG. 8, the feedback information in the method embodiment shown in FIG. 4. For example, the terminal device may generate the feedback information of the first channel by using the RAL layer and/or the PHY layer, and send the feedback information to the network device. Further, the terminal device may prepare, by using the method embodiment shown in FIG. 8, the fourth channel and the data carried on the fourth channel in the method embodiment shown in FIG. 7.

Based on the foregoing solution, because the SDAP layer, the PDCP layer, and the RLC layer can support the transparent mode, processing latency can be reduced by reducing a processing function of each layer. In addition, when the terminal device sends a HARQ-ACK to the network device, the user plane protocol stack shown in FIG. 10A or FIG. 10B may be used. This can reduce processing latency, increase a quantity of HARQ transmissions within maximum latency, and improve data reliability.

Based on same technical concepts as the foregoing methods, as shown in FIG. 11, an apparatus 1100 is provided. The apparatus 1100 may include a processing unit 1120 and an input/output unit 1110. Optionally, a storage unit 1130 is further included. The processing unit 1120 may be separately connected to the storage unit 1130 and the input/output unit 1110, and the storage unit 1130 may also be connected to the input/output unit 1110. The processing unit 1120 may be integrated with the storage unit 1130. The input/output unit 1110 may also be referred to as a transceiver, a transceiver machine, a transceiver apparatus, or the like. The processing unit 1120 may also be referred to as a processor, a processing board, a processing module, a processing apparatus, a logic circuit, or the like. Optionally, a component configured to implement a receiving function in the input/output unit 1110 may be considered as a receiving unit, and a component configured to implement a sending function in the input/output unit 1110 may be considered as a sending unit. In other words, the input/output unit 1110 includes the receiving unit and the sending unit. The input/output unit sometimes may also be referred to as a transceiver machine, a transceiver, a transceiver circuit, an input/output interface circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the input/output unit 1110 is configured to perform sending and receiving operations of the first communication apparatus and/or the second communication apparatus in the foregoing method embodiments, and the processing unit 1120 is configured to perform other operations, different from the sending and receiving operations, of the first communication apparatus and/or the second communication apparatus in the foregoing method embodiments. For example, in an implementation, the input/output unit 1110 is configured to perform a receiving operation of the first communication apparatus and/or the second communication apparatus in FIG. 4, and/or the input/output unit 1110 is further configured to perform other receiving and sending steps of the first communication apparatus and/or the second communication apparatus in embodiments of this application. The processing unit 1120 is configured to perform a processing step of the first communication apparatus and/or the second communication apparatus in FIG. 8, and/or the processing unit 1120 is configured to perform other processing steps of the first communication apparatus and/or the second communication apparatus in embodiments of this application.

It should be noted that the apparatus shown in this embodiment of this application may perform the technical solutions shown in the foregoing method embodiments. Implementation principles and beneficial effects of the apparatus are similar to those of the method embodiments. Details are not described herein again.

The storage unit 1130 is configured to store a computer program.

For example, when the apparatus 1100 is configured to perform a step performed by the first communication apparatus, the input/output unit 1110 is configured to obtain first physical layer control information, where the first physical layer control information includes N pieces of first information, and N is greater than or equal to 2. The processing unit 1120 is configured to obtain target first information from the N pieces of first information. The processing unit 1120 is further configured to estimate the first channel based on the target first information. The input/output unit 1110 is further configured to obtain second physical layer control information from a second communication apparatus. For the first physical layer control information, the first information, the target first information, and the second physical layer control information, refer to related descriptions in the method embodiments shown in FIG. 4 to FIG. 7. Details are not described herein again.

In a design, the processing unit 1120 is further configured to perform channel estimation on a second channel based on a demodulation reference signal DMRS of the second channel. For the DMRS of the second channel, refer to related descriptions in the method embodiments shown in FIG. 4 to FIG. 7. Details are not described herein again.

In a design, when being configured to estimate the first channel based on the target first information, the processing unit 1120 is specifically configured to: perform channel estimation on the first channel based on the DMRS of the second channel. For a method for performing channel estimation on the first channel, refer to related descriptions in the method embodiments shown in FIG. 4 to FIG. 7. Details are not described herein again.

In a design, when being configured to estimate the first channel based on the target first information, the processing unit 1120 is specifically configured to: perform channel estimation on the first channel based on a DMRS symbol corresponding to the first channel. For a method for performing channel estimation on the first channel, refer to related descriptions in the method embodiments shown in FIG. 4 to FIG. 7. Details are not described herein again.

In a design, the input/output unit 1110 is further configured to obtain third physical layer control information from the second communication apparatus. For the third physical layer control information, refer to related descriptions in the method embodiments shown in FIG. 4 to FIG. 7. Details are not described herein again.

For example, when the apparatus 1100 is configured to perform a step performed by the second communication apparatus, the input/output unit 1110 is configured to send first physical layer control information. The processing unit 1120 is configured to generate a first channel based on the target first information. The input/output unit 1110 is further configured to send the first channel. The input/output unit 1110 is further configured to send second physical layer control information. For the first physical layer control information, the target first information, and the second physical layer control information, refer to related descriptions in the method embodiments shown in FIG. 4 to FIG. 7. Details are not described herein again.

In a design, the input/output unit 1110 is further configured to send third physical layer control information to a first communication apparatus. For the third physical layer control information, refer to related descriptions in the method embodiments shown in FIG. 4 to FIG. 7. Details are not described herein again.

For example, when the apparatus 1100 is configured to perform a step performed by the first communication apparatus, the processing unit 1120 is configured to obtain a first bit stream from an application layer or a non-access stratum NAS layer. The processing unit 1120 is further configured to input the first bit stream to a radio access layer RAL layer and perform processing on the first bit stream based on a protocol stack of the RAL layer to generate a second bit stream. The processing unit 1120 is further configured to input the second bit stream to a radio physical layer for radio physical layer function processing to generate a third bit stream. The input/output unit 1110 is configured to send the third bit stream to a second communication apparatus. For the radio physical layer and the RAL layer, refer to related descriptions in the method embodiments shown in FIG. 8 to FIG. 10B. Details are not described herein again.

For example, when the apparatus 1100 is configured to perform a step performed by the first communication apparatus, the input/output unit 1110 is configured to a fourth bit stream from a second communication apparatus. The processing unit 1120 is further configured to input the fourth bit stream to a radio physical layer for radio physical layer function processing to generate a fifth bit stream. The processing unit 1120 is further configured to input the fifth bit stream to a radio access layer RAL layer and perform processing on the fifth bit stream based on a protocol stack of the RAL layer to generate a sixth bit stream. The processing unit 1120 is further configured to transmit the sixth bit stream to an application layer or a non-access stratum NAS layer. For the radio physical layer and the RAL layer, refer to related descriptions in the method embodiments shown in FIG. 8 to FIG. 10B. Details are not described herein again.

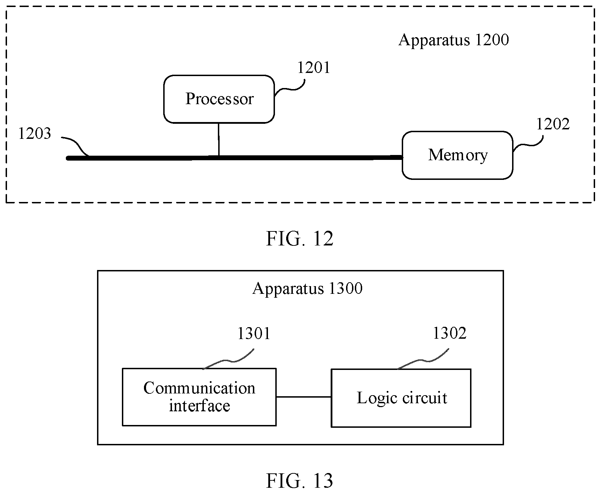

FIG. 12 is a schematic diagram of a hardware structure of an apparatus according to an embodiment of this application. The apparatus 1200 is configured to implement functions of the first communication apparatus and/or the second communication apparatus in the foregoing methods. When the apparatus is configured to implement a function of the first communication apparatus in the foregoing methods, the apparatus may be the first communication apparatus, may be a chip having a function similar to that of the first communication apparatus, or may be an apparatus that can be used through matching with the first communication apparatus. When the apparatus is configured to implement a function of the second communication apparatus in the foregoing method, the apparatus may be the second communication apparatus, or may be a chip having a function similar to that of the second communication apparatus, or may be an apparatus that can be used through matching with the second communication apparatus.

The apparatus 1200 may include a processor 1201 and a memory 1202.

The memory 1202 is configured to store a computer program, and may be further configured to store intermediate data.

The processor 1201 is configured to execute the computer program stored in the memory, to implement the operations in the foregoing methods. For details, refer to related descriptions in the foregoing method embodiments.

Optionally, the memory 1202 may be independent, or may be integrated with the processor 1201. In some implementations, the memory 1202 may even be located outside the apparatus 1200.

When the memory 1202 is a component independent of the processor 1201, the apparatus 1200 may further include a bus 1203, configured to connect the memory 1202 and the processor 1201.

Optionally, the apparatus 1200 may further include a transmitter. For example, the transmitter is configured to send feedback information, or the transmitter is configured to send a first channel.

The apparatus 1200 provided in this embodiment may be a terminal device or a network device, and may be configured to perform the foregoing methods. An implementation and a technical effect of the apparatus are similar to those of the methods. Details are not described in this embodiment again.

FIG. 13 is a schematic diagram of a structure of an apparatus according to an embodiment of this application. Refer to FIG. 13. The apparatus 1300 may include a communication interface 1301 and a logic circuit 1302.

For example, the communication interface 1301 is configured to input first physical layer control information, where the first physical layer control information includes N pieces of first information, and N is greater than or equal to 2. The logic circuit 1302 is configured to obtain target first information from the N pieces of first information, where the target first information indicates a frequency domain resource of a first channel. The logic circuit 1302 is further configured to estimate the first channel based on the target first information. The communication interface 1301 is further configured to input second physical layer control information, where the second physical layer control information includes signaling information that is used by a first communication apparatus to send feedback information. Optionally, the logic circuit 1302 is further configured to generate the feedback information based on the second physical layer control information. The communication interface 1301 is further configured to output the feedback information. For the first physical layer control information, the target first information, the second physical layer control information, and the like, refer to related descriptions in the method embodiments shown in FIG. 4 to FIG. 7.

For example, the communication interface 1301 is configured to output first physical layer control information, where the first physical layer control information includes N pieces of first information, N is greater than or equal to 2, the N pieces of first information include target first information corresponding to a first channel, and the target first information includes indication information of a frequency domain resource of the first channel. The logic circuit 1302 is configured to generate the first channel based on the target first information. The communication interface 1301 is further configured to output the first channel. The communication interface 1301 is further configured to output second physical layer control information, where the second physical layer control information includes signaling information of feedback information of the first channel. Optionally, the communication interface 1301 is further configured to input the feedback information. For the first physical layer control information, the target first information, the second physical layer control information, and the like, refer to related descriptions in the method embodiments shown in FIG. 4 to FIG. 7.

For example, the logic circuit 1302 is configured to obtain a first bit stream from an application layer or a non-access stratum NAS layer. The logic circuit 1302 is configured to input the first bit stream to a radio access layer RAL layer for RAL layer function processing to generate a second bit stream, where the RAL layer function processing includes at least data transfer. The logic circuit 1302 is further configured to input the second bit stream to a radio physical layer for radio physical layer function processing to generate a third bit stream, where the radio physical layer function processing includes at least channel coding. The communication interface 1301 is further configured to output the third bit stream. For the RAL layer, refer to related descriptions in the method embodiments shown in FIG. 8 to FIG. 10B.

For example, the communication interface 1301 is configured to input a fourth bit stream. The logic circuit 1302 is further configured to input the fourth bit stream to a radio physical layer for radio physical layer function processing to generate a fifth bit stream, where the radio physical layer function processing includes at least channel decoding. The logic circuit 1302 is configured to input the fifth bit stream to a radio access layer RAL layer for RAL layer function processing to generate a sixth bit stream, where the RAL layer function processing includes at least data transfer. The logic circuit 1302 further configured to transmit the sixth bit stream to an application layer or a non-access stratum NAS layer. For the RAL layer, refer to related descriptions in the method embodiments shown in FIG. 8 to FIG. 10B.

Optionally, the communication interface 1301 may have a function of the input/output unit 1110 in the embodiment in FIG. 11. The logic circuit 1302 may have a function of the processing unit 1120 in the embodiment in FIG. 11.

Optionally, the logic circuit 1302 may have a function of the processor 1201 in the embodiment in FIG. 12. The logic circuit 1302 may further perform other steps in the method embodiments.

The apparatus 1300 provided in this embodiment of this application may perform the technical solutions shown in the foregoing method embodiments. Implementation principles and beneficial effects of the apparatus are similar to those of the method embodiments. Details are not described herein again.

In another form of this embodiment, a computer-readable storage medium is provided. The computer-readable storage medium stores instructions. When the instructions are executed, the method of the first communication apparatus and/or the method of the second communication apparatus in the foregoing method embodiments are/is performed.

In another form of this embodiment, a computer program product including instructions is provided. When the instructions are executed, the method of the first communication apparatus and/or the method of the second communication apparatus in the foregoing method embodiments are/is performed.

In another form of this embodiment, a computer program is provided. When the computer program is executed, the method of the first communication apparatus and/or the method of the second communication apparatus in the foregoing method embodiments are/is performed.

In another form of this embodiment, a communication system is provided, where the system may include at least one first communication apparatus and at least one second communication apparatus described above.

It should be understood that the processor mentioned in embodiments of the present invention may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer control information transmission method, comprising:
obtaining, by a first communication apparatus, first physical layer control information, wherein the first physical layer control information comprises N pieces of first information, and N is greater than or equal to 2;
obtaining, by the first communication apparatus, target first information from the N pieces of first information, wherein the target first information indicates a frequency domain resource of a first channel;
estimating, by the first communication apparatus, the first channel based on the target first information;
obtaining, by the first communication apparatus, second physical layer control information, wherein the second physical layer control information comprises signaling information that is used by the first communication apparatus to send feedback information corresponding to the first channel; and
sending, by the first communication apparatus, the feedback information based on the second physical layer control information.

2. The method according to claim 1, further comprising:
performing, by the first communication apparatus, channel estimation on a second channel based on a demodulation reference signal DMRS of the second channel.

3. The method according to claim 2, wherein the estimating, by the first communication apparatus, the first channel based on the target first information comprises:
performing, by the first communication apparatus, channel estimation on the first channel based on the DMRS of the second channel.

4. The method according to claim 1, wherein the estimating, by the first communication apparatus, the first channel based on the target first information comprises:
performing, by the first communication apparatus, channel estimation on the first channel based on a DMRS symbol corresponding to the first channel.

5. The method according to claim 4, wherein a subcarrier spacing of the DMRS symbol is greater than a subcarrier spacing of a second channel, or a subcarrier spacing of the DMRS symbol is greater than a subcarrier spacing of the first channel, and the second channel comprises the first physical layer control information.

6. The method according to any one of claims 2 to 5, wherein a time-frequency resource of the second channel is M control channel elements CCEs, and M is greater than or equal to 1.

7. The method according to claim 6, wherein the M CCEs are consecutive CCEs.

8. The method according to any one of claims 2 to 7, wherein the subcarrier spacing of the first channel is less than the subcarrier spacing of the second channel.

9. The method according to any one of claims 1 to 8, further comprising:
obtaining, by the first communication apparatus, third physical layer control information, wherein the third physical layer control information comprises at least one of the following: a hybrid automatic repeat request HARQ process number, a new data indicator NDI, a modulation and coding scheme, a transport block size, or precoding matrix information of the first channel.

10. The method according to any one of claims 1 to 9, wherein a time-frequency resource or CCE location information of the first physical layer control information is indicated by a second communication apparatus, or a time-frequency resource or CCE location information of the first physical layer control information is predefined.

11. The method according to any one of claims 1 to 10, wherein a time-frequency resource or CCE location information of the second physical layer control information is indicated by the second communication apparatus, or a time-frequency resource or CCE location information of the second physical layer control information is predefined.

12. The method according to any one of claims 1 to 11, wherein a location of first information corresponding to the first communication apparatus in the first physical layer control information is indicated by the second communication apparatus, or a location of first information corresponding to the first communication apparatus in the first physical layer control information is determined by the first communication apparatus based on a predefined condition.

13. The method according to any one of claims 1 to 12, wherein a location, in second physical layer control information of a group to which the first communication apparatus belongs, of second physical layer control information corresponding to the first communication apparatus is indicated by the second communication apparatus, or a location, in second physical layer control information of a group to which the first communication apparatus belongs, of second physical layer control information corresponding to the first communication apparatus is determined by the first communication apparatus based on a predefined condition.

14. The method according to any one of claims 1 to 13, wherein a channel estimation manner of the first channel is indicated by the second communication apparatus by using signaling, a channel estimation manner of the first channel is indicated by using the first information, or a channel estimation manner of the first channel is predefined.

15. A physical layer control information transmission method, comprising:
sending, by a second communication apparatus, first physical layer control information, wherein the first physical layer control information comprises N pieces of first information, N is greater than or equal to 2, the N pieces of first information comprise target first information corresponding to a first channel, and the target first information comprises indication information of a frequency domain resource of the first channel;
sending, by the second communication apparatus, the first channel based on the target first information;
sending, by the second communication apparatus, second physical layer control information, wherein the second physical layer control information comprises signaling information of feedback information, and the feedback information is feedback information corresponding to the first channel; and
receiving, by the second communication apparatus, the feedback information.

16. The method according to claim 15, further comprising:
sending, by the second communication apparatus, third physical layer control information, wherein the third physical layer control information comprises at least one of the following: a hybrid automatic repeat request HARQ process number, a new data indicator NDI, a modulation and coding scheme, a transport block size, or precoding matrix information of the first channel.

17. The method according to claim 15 or 16, wherein a time-frequency resource or CCE location information of the first physical layer control information is indicated by the second communication apparatus.

18. The method according to any one of claims 15 to 17, wherein a time-frequency resource or CCE location information of the second physical layer control information is indicated by the second communication apparatus.

19. The method according to any one of claims 15 to 18, wherein a location of first information corresponding to a first communication apparatus in the first physical layer control information is indicated by the second communication apparatus.

20. The method according to any one of claims 15 to 19, wherein a location, in second physical layer control information of a group to which the first communication apparatus belongs, of second physical layer control information corresponding to the first communication apparatus is indicated by the second communication apparatus.

21. The method according to any one of claims 1 to 20, wherein the target first information further comprises at least one of the following:
indication information of a time domain resource of the first channel, pilot information of the first channel, precoding matrix information of the first channel, or a modulation and coding scheme.

22. The method according to any one of claims 1 to 21, wherein the signaling information comprises at least one of:
power control information of a channel carrying the feedback information, resource information of the channel carrying the feedback information, or format information of the channel carrying the feedback information.

23. The method according to any one of claims 1 to 22, wherein the second physical layer control information further comprises at least one of the following: a hybrid automatic repeat request HARQ process number, a new data indicator NDI, a modulation and coding scheme, a transport block size, or precoding matrix information of the first channel.

24. The method according to any one of claims 1 to 23, wherein the first physical layer control information is scrambled by a radio network temporary identifier RNTI.

25. The method according to claim 24, wherein the RNTI is an RNTI of the group to which the first communication apparatus belongs.

26. The method according to claim 25, wherein the second physical layer control information is the second physical layer control information of the group, and the second physical layer control information of the group comprises the second physical layer control information corresponding to the first communication apparatus.

27. The method according to any one of claims 1 to 26, wherein the second physical layer control information is carried on the first 1 to T symbols of the first channel.

28. The method according to any one of claims 1 to 27, wherein the feedback information comprises HARQ acknowledgment information and/or channel state information CSI.

29. A data transmission method, comprising:
obtaining, by a first communication apparatus, a first bit stream from an application layer or a non-access stratum NAS layer;
inputting, by the first communication apparatus, the first bit stream to a radio access layer RAL layer for RAL layer function processing to generate a second bit stream, wherein the second bit stream comprises an RAL header and the first bit stream, and the RAL function processing comprises at least data transfer;
inputting, by the first communication apparatus, the second bit stream to a radio physical layer for radio physical layer function processing to generate a third bit stream, wherein the radio physical layer function processing comprises at least channel coding; and
sending, by the first communication apparatus, the third bit stream.

30. The method according to claim 29, wherein the RAL header comprises first information, wherein
the first information indicates that the first bit stream is a data bearer or a signaling bearer;
the first information indicates at least two logical channel identities, a first logical channel identity in the at least two logical channel identities corresponds to a data bearer, and a second logical channel identity corresponds to a signaling bearer; or
the first information indicates that the first bit stream is from the application layer, or the first information indicates that the first bit stream is from the NAS layer.

31. The method according to claim 29 or 30, wherein the second bit stream comprises a message authentication code for integrity part, and the message authentication code for integrity part follows the first bit stream.

32. The method according to claim 30, wherein the RAL header in the second bit stream precedes the first bit stream.

33. A data transmission method, comprising:
receiving, by a first communication apparatus, a fourth bit stream from a second communication apparatus;
inputting, by the first communication apparatus, the fourth bit stream to a radio physical layer for radio physical layer function processing to generate a fifth bit stream, wherein the radio physical layer function processing comprises at least channel decoding, and the fifth bit stream comprises an RAL header and a sixth bit stream;
inputting, by the first communication apparatus, the fifth bit stream to a radio access layer RAL layer for RAL layer function processing to generate the sixth bit stream, wherein the RAL function processing comprises at least data transfer; and
transmitting, by the first communication apparatus, the sixth bit stream to an application layer or a non-access stratum NAS layer.

34. The method according to claim 33, wherein the RAL header comprises first information, wherein
the first information indicates that the fourth bit stream is a data bearer or a signaling bearer;
the first information indicates at least two logical channel identities, a first logical channel identity in the at least two logical channel identities corresponds to a data bearer, and a second logical channel identity corresponds to a signaling bearer; or
the first information indicates that the fourth bit stream is from the application layer or the NAS layer

35. The method according to claim 33 or 34, wherein the fifth bit stream comprises a message authentication code for integrity part, the message authentication code for integrity part is located in the last 1 to K bytes in the fifth bit stream, and K is greater than or equal to 1.

36. The method according to claim 34 or 35, wherein the RAL header in the fifth bit stream precedes the sixth bit stream.

37. The method according to any one of claims 29 to 36, wherein the RAL function processing further comprises at least one of the following: entity establishment, entity release, hybrid automatic repeat request HARQ, radio bearer release, radio bearer establishment, exception handling, event triggering, paging channel message reception, broadcast channel reception, RAL duplication, Ethernet header compression, timing advance, random access, or data volume calculation.

38. The method according to claim 37, wherein the radio bearer establishment comprises data radio bearer establishment and/or signaling radio bearer establishment.

39. The method according to claim 37 or 38, wherein the radio bearer release comprises data radio bearer release and/or signaling radio bearer release.

40. A physical layer control information transmission apparatus, comprising a processing unit and an input/output unit, wherein
the input/output unit is configured to obtain first physical layer control information, wherein the first physical layer control information comprises N pieces of first information, and N is greater than or equal to 2;
the processing unit is configured to obtain target first information from the N pieces of first information, wherein the target first information indicates a frequency domain resource of a first channel;
the processing unit is further configured to estimate the first channel based on the target first information;
the input/output unit is further configured to obtain second physical layer control information, wherein the second physical layer control information comprises signaling information that is used by the first communication apparatus to send feedback information corresponding to the first channel; and
the input/output unit is further configured to send the feedback information based on the second physical layer control information.

41. The apparatus according to claim 40, wherein the processing unit is further configured to:
perform channel estimation on a second channel based on a demodulation reference signal DMRS of the second channel.

42. The apparatus according to claim 41, wherein when being configured to estimate the first channel based on the target first information, the processing unit is specifically configured to:
perform channel estimation on the first channel based on the DMRS of the second channel.

43. The apparatus according to claim 40, wherein when being configured to estimate the first channel based on the target first information, the processing unit is specifically configured to:
perform channel estimation on the first channel based on a DMRS symbol corresponding to the first channel.

44. The apparatus according to claim 43, wherein a subcarrier spacing of the DMRS symbol is greater than a subcarrier spacing of a second channel, or a subcarrier spacing of the DMRS symbol is greater than a subcarrier spacing of the first channel, and the second channel comprises the first physical layer control information.

45. The apparatus according to any one of claims 41 to 44, wherein a time-frequency resource of the second channel is M control channel elements CCEs, and M is greater than or equal to 1.

46. The apparatus according to claim 45, wherein the M CCEs are consecutive CCEs.

47. The apparatus according to any one of claims 41 to 46, wherein the subcarrier spacing of the first channel is less than the subcarrier spacing of the second channel.

48. The apparatus according to any one of claims 40 to 47, wherein the input/output unit is further configured to obtain third physical layer control information, wherein the third physical layer control information comprises at least one of the following: a hybrid automatic repeat request HARQ process number, a new data indicator NDI, a modulation and coding scheme, a transport block size, or precoding matrix information of the first channel.

49. The apparatus according to any one of claims 40 to 48, wherein a time-frequency resource or CCE location information of the first physical layer control information is indicated by a second communication apparatus, or a time-frequency resource or CCE location information of the first physical layer control information is predefined.

50. The apparatus according to any one of claims 40 to 49, wherein a time-frequency resource or CCE location information of the second physical layer control information is indicated by the second communication apparatus, or a time-frequency resource or CCE location information of the second physical layer control information is predefined.

51. The apparatus according to any one of claims 40 to 50, wherein a location of first information corresponding to the first communication apparatus in the first physical layer control information is indicated by the second communication apparatus, or a location of first information corresponding to the first communication apparatus in the first physical layer control information is determined by the first communication apparatus based on a predefined condition.

52. The apparatus according to any one of claims 40 to 51, wherein a location, in second physical layer control information of a group to which the first communication apparatus belongs, of second physical layer control information corresponding to the first communication apparatus is indicated by the second communication apparatus, or a location, in second physical layer control information of a group to which the first communication apparatus belongs, of second physical layer control information corresponding to the first communication apparatus is determined by the first communication apparatus based on a predefined condition.

53. The apparatus according to any one of claims 40 to 52, wherein a channel estimation manner of the first channel is indicated by the second communication apparatus by using signaling, a channel estimation manner of the first channel is indicated by using the first information, or a channel estimation manner of the first channel is predefined.

54. A physical layer control information transmission apparatus, comprising a processing unit and an input/output unit, wherein
the input/output unit is configured to send first physical layer control information, wherein the first physical layer control information comprises N pieces of first information, N is greater than or equal to 2, the N pieces of first information comprise target first information corresponding to a first channel, and the target first information comprises indication information of a frequency domain resource of the first channel;
the processing unit is configured to generate the first channel based on the target first information;
the input/output unit is further configured to send the first channel;
the input/output unit is further configured to send second physical layer control information, wherein the second physical layer control information comprises signaling information of feedback information of the first channel; and
the input/output unit is further configured to receive the feedback information.

55. The apparatus according to claim 54, wherein the input/output unit is further configured to send third physical layer control information, wherein the third physical layer control information comprises at least one of the following: a hybrid automatic repeat request HARQ process number, a new data indicator NDI, a modulation and coding scheme, a transport block size, or precoding matrix information of the first channel.

56. The apparatus according to claim 54 or 55, wherein a time-frequency resource or CCE location information of the first physical layer control information is indicated by a second communication apparatus.

57. The apparatus according to any one of claims 54 to 56, wherein a time-frequency resource or CCE location information of the second physical layer control information is indicated by the second communication apparatus.

58. The apparatus according to any one of claims 54 to 57, wherein a location of first information corresponding to a first communication apparatus in the first physical layer control information is indicated by the second communication apparatus.

59. The apparatus according to any one of claims 54 to 58, wherein a location, in second physical layer control information of a group to which the first communication apparatus belongs, of second physical layer control information corresponding to the first communication apparatus is indicated by the second communication apparatus.

60. The apparatus according to any one of claims 40 to 59, wherein the target first information further comprises at least one of the following:
indication information of a time domain resource of the first channel, pilot information of the first channel, precoding matrix information of the first channel, or a modulation and coding scheme.

61. The apparatus according to any one of claims 40 to 60, wherein the signaling information comprises at least one of:
power control information of a channel carrying the feedback information, resource information of the channel carrying the feedback information, or format information of the channel carrying the feedback information.

62. The apparatus according to any one of claims 40 to 61, wherein the second physical layer control information further comprises at least one of the following: a hybrid automatic repeat request HARQ process number, a new data indicator NDI, a modulation and coding scheme, a transport block size, or precoding matrix information of the first channel.

63. The apparatus according to any one of claims 40 to 62, wherein the first physical layer control information is scrambled by a radio network temporary identifier RNTI.

64. The apparatus according to claim 63, wherein the RNTI is an RNTI of the group to which the first communication apparatus belongs.

65. The apparatus according to claim 64, wherein the second physical layer control information is the second physical layer control information of the group, and the second physical layer control information of the group comprises the second physical layer control information corresponding to the first communication apparatus.

66. The apparatus according to any one of claims 40 to 65, wherein the second physical layer control information is carried on the first 1 to T symbols of the first channel.

67. The apparatus according to any one of claims 40 to 66, wherein the feedback information comprises HARQ acknowledgment information and/or channel state information CSI.

68. A data transmission apparatus, comprising a processing unit and an input/output unit, wherein
the processing unit is configured to obtain a first bit stream from an application layer or a non-access stratum NAS layer;
the processing unit is further configured to input the first bit stream to a radio access layer RAL layer and perform processing on the first bit stream based on a protocol stack of the RAL layer to generate a second bit stream, wherein the second bit stream comprises an RAL header and the first bit stream, and the RAL function processing comprises at least data transfer; the processing unit is further configured to input the second bit stream to a radio physical layer for radio physical layer function processing to generate a third bit stream, wherein the radio physical layer function processing comprises at least channel coding; and
the input/output unit is configured to send the third bit stream.

69. The apparatus according to claim 68, wherein the RAL header comprises first information, wherein
the first information indicates that the first bit stream is a data bearer or a signaling bearer;
the first information indicates at least two logical channel identities, a first logical channel identity in the at least two logical channel identities corresponds to a data bearer, and a second logical channel identity corresponds to a signaling bearer; or
the first information indicates that the first bit stream is from the application layer, or the first information indicates that the first bit stream is from the NAS layer

70. The apparatus according to claim 68 or 69, wherein the second bit stream comprises a message authentication code for integrity part, and the message authentication code for integrity part follows the first bit stream.

71. The apparatus according to claim 70, wherein the RAL header in the second bit stream precedes the first bit stream.

72. A data transmission apparatus, comprising a processing unit and an input/output unit, wherein
the input/output unit is configured to a fourth bit stream from a second communication apparatus;
the processing unit is configured to input the fourth bit stream to a radio physical layer for radio physical layer function processing to generate a fifth bit stream, wherein the radio physical layer function processing comprises at least channel decoding, and the fifth bit stream comprises an RAL header and a sixth bit stream;
the processing unit is further configured to input the fifth bit stream to a radio access layer RAL layer and perform processing on the fifth bit stream based on a protocol stack of the RAL layer to generate the sixth bit stream, wherein the protocol stack of the RAL layer comprises data transfer; and
the processing unit is further configured to transmit the sixth bit stream to an application layer or a non-access stratum NAS layer.

73. The apparatus according to claim 72, wherein the RAL header comprises first information, wherein
the first information indicates that the fourth bit stream is a data bearer or a signaling bearer;
the first information indicates at least two logical channel identities, a first logical channel identity in the at least two logical channel identities corresponds to a data bearer, and a second logical channel identity corresponds to a signaling bearer; or
the first information indicates that the fourth bit stream is from the application layer or the NAS layer

74. The apparatus according to claim 72 or 73, wherein the fifth bit stream comprises a message authentication code for integrity part, the message authentication code for integrity part is located in the last 1 to K bytes in the fifth bit stream, and K is greater than or equal to 1.

75. The apparatus according to claim 73 or 74, wherein the RAL header in the fifth bit stream precedes the sixth bit stream.

76. The apparatus according to any one of claims 68 to 75, wherein the RAL function processing further comprises at least one of the following: entity establishment, entity release, hybrid automatic repeat request HARQ, radio bearer release, radio bearer establishment, exception handling, event triggering, paging channel message reception, broadcast channel reception, RAL duplication, Ethernet header compression, timing advance, random access, or data volume calculation.

77. The apparatus according to claim 76, wherein the radio bearer establishment comprises data radio bearer establishment and/or signaling radio bearer establishment.

78. The apparatus according to claim 76 or 77, wherein the radio bearer release comprises data radio bearer release and/or signaling radio bearer release.

79. A physical layer control information transmission apparatus, comprising a processor and a memory, wherein
the memory is configured to store a computer program or instructions; and
the processor is configured to execute the computer program or the instructions in the memory, so that the apparatus performs the method according to any one of claims 1 to 14 or 21 to 28, or the apparatus performs the method according to any one of claims 15 to 28.

80. A data transmission apparatus, comprising a processor and a memory, wherein
the memory is configured to store a computer program or instructions; and
the processor is configured to execute the computer program or the instructions in the memory, so that the apparatus performs the method according to any one of claims 29 to 32 or 37 to 39, or the apparatus performs the method according to any one of claims 33 to 39.

81. A computer-readable storage medium, wherein the computer-readable storage medium stores computer-executable instructions; and when the computer executable instructions are invoked by a computer, the method according to any one of claims 1 to 14 or 21 to 28 is performed, the method according to any one of claims 15 to 28 is performed, the method according to any one of claims 29 to 32 or 37 to 39 is performed, or the method according to any one of claims 33 to 39 is performed.

82. A computer program product, comprising computer-executable instructions, wherein when the instructions are run on a computer, the method according to any one of claims 1 to 14 or 21 to 28 is performed, the method according to any one of claims 15 to 28 is performed, the method according to any one of claims 29 to 32 or 37 to 39 is performed, or the method according to any one of claims 33 to 39 is performed.
